(19)

Europäisches
Patentamt
European
Patent Office
Office européen
des brevets

(11) **EP 2 447 584 A1**

(12) **EUROPEAN PATENT APPLICATION**
published in accordance with Art. 153(4) EPC

(43) Date of publication:
    **02.05.2012  Bulletin 2012/18**

(21) Application number: **11775026.5**

(22) Date of filing: **27.04.2011**

(51) Int Cl.:
    *F16L 5/04* (2006.01)      *B32B 1/08* (2006.01)
    *B32B 27/30* (2006.01)      *C08K 3/26* (2006.01)
    *C08K 3/40* (2006.01)      *F16L 9/12* (2006.01)
    *F16L 11/04* (2006.01)      *F16L 11/12* (2006.01)

(86) International application number:
    **PCT/JP2011/060211**

(87) International publication number:
    **WO 2011/136245 (03.11.2011 Gazette 2011/44)**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**

(30) Priority: **30.04.2010  JP 2010105455
    27.04.2010  JP 2010102230
    27.04.2010  JP 2010102226
    27.04.2010  JP 2010102222**

(71) Applicant: **Mitsubishi Plastics, Inc.
    Tokyo 103-0021 (JP)**

(72) Inventors:
    • **HOSHINO, Yuusuke
      Hiratsuka-shi
      Kanagawa 254-0019 (JP)**
    • **AJIHARA, Yuuji
      Hiratsuka-shi
      Kanagawa 254-0019 (JP)**
    • **OGAWA, Masato
      Nagahama-shi
      Shiga 526-8660 (JP)**

(74) Representative: **Adam, Holger
    Kraus & Weisert
    Patent- und Rechtsanwälte
    Thomas-Wimmer-Ring 15
    80539 München (DE)**

(54) **FIRE-RESISTANT PIPING MATERIAL**

(57)    [PROBLEM TO BE SOLVED] To provide a piping material for fire-resistant which has an excellent fire protection performance, and good physical properties, coloring availability and is also excellent in recycling ability.

[MEANS FOR SOLVING] The fire-resistant piping material is formed by using a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound. Here, it is preferable that, relative to 100 parts by mass of the polyvinyl chloride-based resin, the synthetic hydrotalcite compound is contained in an amount within a range of 2 parts by mass to 12 parts by mass, and the at least one selected from the group consisting of the Ca-Zn-based thermal stabilizer, the Mg-Zn-based thermal stabilizer and the Ca-Mg-Zn-based thermal stabilizer is contained in an amount within a range of 0.4 parts by mass to 2.5 parts by mass.

FIG. 4

**Description**

TECHNICAL FIELD

The present invention relates to a fire-resistant piping material, and especially to a piping material provided with fire resistance as a piping material installed in building structure.

BACKGROUND ARTS

When installing pipes (pipe for electric wire, drain pipe, duct, etc.) in building structure, there is employed a fire prevention treatment method which provides through-holes in partitions of building structure such as floors, walls and compartment partitions (compartment pass-through section) for passing pipes therethrough, and which, after passing the pipes through the compartment pass-through sections, closes a through the use of mortar or the like so as not to cause a gap between the compartment pass-through section and the pipe.

When the piping material is made of metal, since the metal itself has heat resistance incombustibility, there is no problem for employing the aforementioned fire prevention treatment method. When the piping material is made of synthetic resin, however, although there are merits of light weight and ease of handling in comparison with the case of being made of metal, there is a defect of heat resistance being inferior. Accordingly, in a case of the piping material made of synthetic resin, when the fire takes place, the piping material burns out or deforms by heat which produces gaps in the compartment pass-through sections to form through-holes, and thus there is danger that heat, fire, smoke, etc. generated on one side of the partition reach the other side.

Examples of raw material mainly used for forming the piping material made of synthetic resin are vinyl chloride-based resin, polyethylene, polypropylene, etc. For forming the piping material made of the vinyl chloride-based resin, thermal stabilizers are usually used. There are many kinds of the thermal stabilizers to be used, and the thermal stabilizers are optionally used depending on the intended use. The thermal stabilizer used frequently is a lead-based thermal stabilizer which has merits from the viewpoints of moldability, cost performance or the like of raw material, etc. However, for the application of supplying drinking water, it is necessary to use a piping material which would not bleed out harmful lead, and generally there is used a Ca-Zn-based thermal stabilizer, a Ba-Zn-based thermal stabilizer, a Mg-Zn-based thermal stabilizer or a tin-based thermal stabilizer. Because the Ca-Zn-based thermal stabilizer, the Ba-Zn-based thermal stabilizer, the Mg-Zn-based thermal stabilizer or the tin-based thermal stabilizer are expensive and inferior moldability in comparison with the lead-based thermal stabilizer, they would not be used for use other than drinking water, and are specified to the drinking water use.

As fire-resistant piping materials, there has been known a fire-resistant piping material that is laminated with a fire-resistant coating layer such as an aluminum glass cloth or mortar on an outer surface of a piping material made of synthetic resin (for example, see Patent Document 1). However, since this fire-resistant piping material is produced by laminating other material, there has been a problem in which productivity is low because of difficulty in continuous production. In addition, when an outer surface of the fire-resistant piping material is coated with a mortar, since a weight of the obtained piping material is very large, there also raises a problem that workability is inferior at the time of transportation and setting work.

As another fire-resistant piping material, there is also employed a fire prevention treatment method where a sheet-like covering material provided with expansion ability for fire prevention is wound on the outer surface of the piping material made of synthetic resin. However, when carrying out such a fire prevention treatment method by using the sheet-like covering material, first, a piping material made of synthetic resin is piped temporarily and positions are set in which the sheet-like covering material are wound, then the winding of the sheet-like covering material on the piping material is performed to support and fix the piping material, and thereafter, openings are filled again with a mortar. Accordingly, there are problems in which many working steps required, a long working period of time is necessary, and further it is difficult to adjust the position of the piping after winding the sheet-like covering material on the piping material.

In order to solve the aforementioned problems, there disclose techniques where a resin composition having fire-resistant expandability is used as a plugging material for the piping material itself and through-hole. For example, there is known a fire prevention expandable resin composition as the plugging material for through-holes of fire prevention compartment materials which is fabricated by blending a heat expandable graphite as an inorganic expandable agent with a base resin such as rubber, thermoplastic elastomer, or liquid polymer, and blending polycarbonate resin or polyphenylene sulfide resin, etc. as a resin for preventing deformation (for example, see Patent Document 2). Further, there is known a resin composition that is fabricated by blending a thermoplastic resin such as polyvinyl chloride with a phosphorous compound, a heat expandable graphite and an inorganic filler in a large amount (for example, see Patent Document 3).

However, with respect to the former fire prevention expandable resin composition, since rubber, thermoplastic elastomer, liquid polymer, etc. are used as a base resin, there raises a problem in which the obtained piping material is inferior in mechanical strength.

On the other hand, though the latter resin composition disclosed in Patent Document 3 has an excellent flame retardancy, it is inferior in moldability because of high content of the inorganic filler, the heat expandable graphite, the phosphorous compound, etc., and also, there is a risk to damage the appearance of the molded article due to decomposition of the phosphorous compound such as ammonium polyphosphate at extrusion molding or injection molding. When the molding is conducted at a low temperature in order to control the decomposition of the phosphorous compound, there is a risk that the mechanical strength and impact resistance of the obtained molded article are lowered.

A piping material for building structure of a polyvinyl chloride-based resin composition containing a heat expandable graphite (for example, see Patent Document 4) is good in workability, but has a problem that it is difficult to color freely, because the piping material for building structure exhibits black due to graphite. In addition, since the heat expandable graphite has a worse compatibility with vinyl chloride, and a dispersion particle size is in dispersion state to induce internal defects having some micron meters or more, there are problems that cracks are easy to occur at drilling the piping material, and elongation of pipe is low. Further, since the heat expandable graphite is decomposed by heating, it is not a suitable material to recycling in views of color of piping material, mechanical strength and processability.

PRIOR DOCUMENTS

Patent Document

Patent Document 1: Resisted Utility Model No. 3036449
Patent Document 2: JP-H09-176498 A
Patent Document 3: JP-H10-95887 A
Patent Document 4: JP2008-180068 A

SUMMURY OF THE INVENTION

PROBLEMS TO BE SOLVED BY THE INVENTION

From the viewpoint of fire protection performance, it is preferable that a piping material itself exhibits fire protection performance. For accomplishing the object, it is necessary to impart the following functions to the piping material.

(1) To prevent flame from belch to non-heated side by delaying a burning speed of piping material.
In order to delay a burning speed, it is desirable to prevent the piping material itself from burnout, and to prevent the heat-flow into the compartment pass-through section as far as possible by heat-expanding the pipe wall at the time of combustion or by other means. Namely, it is the best means to shut out the flame by maintaining the piping material in almost clogged condition at the heated side. In addition, it is more preferable that the residue cannot be burnout.
(2) Not to generate smoke at non-heated side by maintaining sealing ability between the piping material and the mortar provided on the peripheral surface thereof at the time of combustion.

The present invention has been completed to solve the aforementioned problems, and the object of the present invention is to provide a piping material for fire-resistant which has an excellent fire prevention, and good physical properties, coloring availability and is also excellent in recycling ability.

MEANS FOR SOLVING THE PROBLEMS

The present inventors have made intensive study to solve the aforementioned problems, and have completed the present invention.
Namely, the fire-resistant piping material according to the present invention is characterized by being formed through the use of a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, in which the amount of the synthetic hydrotalcite compound is 2 parts by mass to 12 parts by mass relative to 100 parts by mass of the polyvinyl chloride-based resin.

Here, it is preferable that the fire-retardant resin composition further contains a borosilicate glass in an amount of 2 parts by mass to 10 parts by mass relative to 100 parts by mass of the polyvinyl chloride-based resin.

In the present invention, it is preferable that the fire-retardant resin composition contains at least one selected from the group consisting of the Ca-Zn-based thermal stabilizer, the Mg-Zn-based thermal stabilizer and the Ca-Mg-Zn-based thermal stabilizer to be used, in an amount of 0.4 part by mass to 2.5 parts by mass relative to 100 parts by mass of the polyvinyl chloride-based resin.

In the present invention, it is preferable that the fire-resistant piping material is formed by using a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire resistance test which is conducted by passing the piping material through a floor material, in accordance with ISO834-1, there exists a state in which an exposed length of the piping material at the heated side is shortened at least one time while maintaining the exposed length being not zero, and a residue is formed so as to put the through-hole into a state close to a closure while maintaining the exposed length of the piping material at the heated side being not zero when the fire resistance test is terminated.

In the present invention, it is preferable that the fire-resistant piping material is formed by using a fire-retardant resin composition which comprises a polyvinyl chloride -based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire resistance test which is conducted in accordance with ISO834-1 by passing the piping material through a floor material, a temperature of the surface of the piping material at a position of 10 mm height from the floor material in a non-heated area is not beyond 100˚C at the time when 60 minutes has elapsed from the start of the fire resistance test.

In the present invention, it is preferable that the fire-resistant piping material is formed by using a fire-retardant resin composition which comprises a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire resistance test which is conducted in accordance with ISO834-1 by passing the piping material through a wall material, a residue is formed, and a period of time required until a downward deflection amount at a position of 40 mm from the wall material of the piping material in a non-heated area reaches 5 mm or more is 60 minutes or longer from the starting the fire resistance test. In this fire resistance test, in order to make a period of time required until the deflection amount reaches a given amount 60 minutes or longer, the resin composition is required to contain the borosilicate glass.

In addition, it is preferable that the fire-resistant piping material includes at least three layers having an outer layer, a middle layer and an inner layer, in which the middle layer is formed by using the fire-retardant resin composition.

Here, it is preferable that the outer layer and the inner layer contain a molybdenum-based smoke suppressant.

The piping structure according to the present invention is characterized by using any of the aforementioned fire-resistant piping materials, and piping through building structure.

## EFFECT OF THE INVENTION

The fire-resistant piping material according to the present invention exhibits excellent fire protection performance because the fire-resistant piping material itself has fire protection performance, has good physical properties such as mechanical properties, can be colored, and further is superior in recycling property. In addition the piping structure in which the fire-resistant piping materials according to the present invention are piped in building structure can exhibit excellent fire protection performance.

## BRIEF EXPLANATION OF DRAWINGS

[Fig.1A to Fig.1D] Fig.1A to Fig.1D are schematic explanatory views of the state of residue when burning the fire-resistant piping material of the present invention which passes through the floor material.

[Fig.2] Fig.2 is a view for explaining the measuring method of the deflection amount of the piping material.

[Fig.3A to Fig.3D] Fig.3A to Fig.3D are schematic explanatory views of the state of residue when burning the fire-resistant piping material of the present invention which passes through a wall material.

[Fig.4] Fig.4 is a schematic view of a piping state of the piping material, and is a front view which shows a part of the piping state from a side of the floor material.

[Fig.5] Fig. 5 is a schematic perspective view of the fire-resistance test furnace used for the fire-resistance performance test (I).

[Fig. 6] Fig. 6 is a schematic perspective view of the fire-resistance test furnace used for the fire-resistance performance test (IV).

EMBODIMENT TO CARRY OUT THE INVENTION

The present invention will be explained in detail herein below.
The fire-resistant piping material according to the present invention is formed by using the fire-retardant resin composition which contains at least one selected from the group consisting of a Ca-Zn-based thermal stabilizer, a Mg-Zn-based thermal stabilizer and a Ca-Mg-Zn-based thermal stabilizer, and a synthetic hydrotalcite compound, in given amounts relative to a polyvinyl chloride-based resin. The amount of at least one selected from the group consisting of the Ca-Zn-based thermal stabilizer, the Mg-Zn-based thermal stabilizer and the Ca-Mg-Zn-based thermal stabilizer relative to 100 parts by mass of the polyvinyl chloride-based resin is preferably within a range of 0.4 parts by mass to 2.5 parts by mass, more preferably within a range of 0.6 parts by mass to 2.0 parts by mass, particularly preferably within a range of 0.9 parts by mass to 1.3 parts by mass. When the amount of at least one selected from the group consisting of the Ca-Zn-based thermal stabilizer, the Mg-Zn-based thermal stabilizer and the Ca-Mg-Zn-based thermal stabilizer is within a range of 0.4 parts by mass to 2.5 parts by mass, the fire retardancy of the vinyl chloride-based resin can be drastically improved to realize the effect of the present invention.

Furthermore, the amount of the synthetic hydrotalcite compound relative to 100 parts by mass of the polyvinyl chloride-based resin is within a range of 2 parts by mass to 12 parts by mass, preferably within a range of 2.5 parts by mass to 10 parts by mass more preferably within a range of 3 parts by mass to 7 parts by mass. When the amount of the synthetic hydrotalcite compound is within a range of 2 parts by mass to 12 parts by mass, the fire retardancy of the vinyl chloride-based resin can be drastically improved to realize effect of the present invention. However, when carrying out the fire-resistance test by using the fire-resistance test machine (I) mentioned bellow, in order to satisfy the requirement where a smoke generation time is 120 minutes or more, it is necessary to contain the synthetic hydrotalcite compound relative to 100 parts by mass of the polyvinyl chloride-based resin within a range of 2 parts by mass to 12 parts by mass.

The reason why at least one selected from the group consisting of the Ca-Zn-based thermal stabilizer, the Mg-Zn-based thermal stabilizer and the Ca-Mg-Zn-based thermal stabilizer is blended with the polyvinyl chloride-based resin is, for example, that, when a usual Pb-based thermal stabilizer used for drain pipe is blended with the vinyl chloride-based resin, there is tendency, due to its high chlorine-trapping capability, that the radical trapping which is a mechanism of fire retardancy is inhibited, and thus the performance cannot be exhibited sufficiently, which results in not being able to obtain desired fire retardancy.

In addition, the reason why the synthetic hydrotalcite is blended is as follows. Namely, the synthetic hydrotalcite contains crystal water among its molecules, which begins to be dehydrated at about 180°C and then is completely withdrawn at about 300°C. The synthetic hydrotalcite maintains its crystal structure to that condition, and the crystal structure begins to be decomposed when exceeding about 350°C to release water and carbon dioxide. Accordingly, since the synthetic hydrotalcite begins to be endothermicly decomposed at a temperature lower by 60°C to 75°C than about 200°C to about 300°C which is the thermal decomposition temperature of the vinyl chloride-based resin, the thermal decomposition of the vinyl chloride-based resin can be suppressed efficiently by the endothermic decomposition of the hydrotalcite to thereby be able to maintain a carbonized state of the vinyl chloride-based resin longer.

Conventionally, the synthetic hydrotalcite has been used to improve heat resistance, and the temperature range in which the effect can be obtained has been about 100°C. Moreover, since the synthetic hydrotalcite has high water absorbing property and hygroscopic property, it is important for a forming of resins to inhibit the water absorbing property and hygroscopic property, and thus the study has been made by considering such a technical problem.

The inventors of this invention have focused attention on the high water absorbing property and hygroscopic property of the synthetic hydrotalcite which are problems to be solved, and have found that the synthetic hydrotalcite exhibits excellent dehydration effect at a high temperature range of about 180°C or higher, and has particularly excellent effect for suppressing the thermal decomposition of the vinyl chloride-based resin, and then have completed the invention of the piping material made of resins having fire-resistance performance.

Examples of the polyvinyl chloride-based resin used in the present invention include, for example, polyvinyl chloride homopolymer, a copolymer of vinyl chloride monomer and a monomer having an unsaturated bond copolymerizable with the vinyl chloride monomer, a graft copolymer in which a polymer (including copolymer) other than vinyl chloride is graft-copolymerized with vinyl chloride, and the like. In the present invention, these may be used alone, and can also be used in combination with two or more kinds. Furthermore, as necessary, the aforementioned polyvinyl chloride-based resin may be chlorinated. The chlorination method of the vinyl chloride-based resin is not particularly limited and a well-known chlorination method can be employed, and for example, there may be employed heat chlorination method, optical chlorination method, or the like.

Examples of the monomer having an unsaturated bond copolymerizable with the vinyl chloride monomer include, for example, $\alpha$-olefins such as ethylene, propylene and butylene; vinyl esters such as vinyl acetate and vinyl propionate; vinyl ethers such as butyl vinyl ether and cetyl vinyl ether; (meth)acrylic esters such as methyl (meth)acrylate, ethyl (meta)acrylate and butyl acrylate; aromatic vinyls such as styrene and $\alpha$-methylstyrene; N-substituted maleimides such as N-phenylmaleimide and N-cyclohexylmaleimide; and the like. These may be used alone, and can also be used in combination with two or more kinds.

As the polymer (including copolymer) other than vinyl chloride used for the aforementioned graft copolymer, there can be used any one which can perform the graft-copolymerization with vinyl chloride without particular limitation, and examples of the polymer include, for example, ethylene-vinyl acetate copolymer, ethylene-vinyl acetate-carbon monooxide copolymer, ethylene-ethyl acrylate copolymer, ehtylene-butyl acrylate-carbon monooxide copolymer, ethylene-methyl methacrylate copolymer, ethylene-propylene copolymer, acrylonitrile-butadiene copolymer, polyurethane, chlorinated polyethylene, chlorinated polypropylene, and the like. These may be used alone, and can also be used in combination with two or more kinds.

An average degree of polymerization of the polyvinyl chloride-based resin is not particularly limited. However, when the average degree of polymerization is small, physical properties of the obtained molded article tend to be lowered, and when the average degree of polymerization is large, molding is difficult due to high melt viscosity, therefore, the average degree of polymerization is preferably within the range of 400 to 1,600, more preferably 600 to 1,400. In the present invention, the average degree of polymerization means an average degree of polymerization measured in accordance with the "Testing Method For Polyvinyl Chloride" defined in Japan Industrial Standard JIS K-6721 through the use of a test sample which is obtained by dissolving a vinyl chloride-based resin in tetrahydrofuran (THF), and, after removing an insoluble component by filtration, THF in the filtrate is removed by drying.

The aforementioned vinyl chloride-based resin can be obtained by a well-known polymerization method without particular limitation, and can be obtained by bulk polymerization, solution polymerization, emulsion polymerization, suspension polymerization, or the like.

In addition, the aforementioned vinyl chloride-based resin may be subjected to treatments such as cross-linking and modification, as far as they do not deteriorate the effects of the present invention, for example, within a range not inhibiting fire-resistance performance. In such a case, there may be used a previously cross-linked, modified resin, may be cross-linked, modified at the same time when blending additives and the like, or may be cross-linked, modified after blending various components with the resin. As the cross-linking method, there can be employed a usual known cross-linking method used for the vinyl chloride-based resin without particular limitation, and can be employed, for example, a cross-linking method by using various cross-linking agents, peroxide, etc, a cross-linking method by irradiation of electron beam, a cross-linking method using a water-crosslinkable material, and the like.

As the polyvinyl chloride-based resin, a commercially available one is, for example, "TK1000HN" (average degree of polymerization: 1030) manufactured by SHIN-ETSU CHEMICAL CO., LTD.

The Mg-Zn-based thermal stabilizer, Ca-Zn-based thermal stabilizer and Ca-Mg-Zn-based thermal stabilizer to be used in the present invention are preferably thermal stabilizers of metal soaps. As the Mg-Zn-based, Ca-Zn-based and Ca-Mg-Zn-based metal soap thermal stabilizers, there can be used in various combinations of zinc stearate, magnesium stearate, calcium stearate, and the like. For example, as the Ca-Mg-Zn-based metal soap thermal stabilizer, there can be used in combination of zinc stearate, magnesium stearate and calcium stearate. Preferable examples of the magnesium components and the calcium components include a magnesium salt and a calcium salt such as an organic acid salt of magnesium and calcium or an inorganic acid salt of magnesium and calcium, or the like, and preferable examples of the zinc component include a zinc salt such as an organic acid salt of zinc, an inorganic acid salt of zinc, or the like.

Here, preferable examples of the organic acid include fatty acids such as acetic acid, propionic acid, butyric acid, valeric acid, caproic acid, octanoic acid, lauric acid, stearic acid, behenic acid, octylic acid and benzoic acid, and preferable examples of the inorganic acid are a hydroxide, an oxide, phosphoric acid, phosphorous acid, silicic acid, nitric acid, nitrous acid, sulfuric acid, sulfurous acid, boric acid, carbonic acid, and the like. In addition, in accordance with the objects such as improvement of heat resistance, an organic acid salt of sodium or the like can be used together with the aforementioned metal soap.

Among the constituents of the Mg-Zn-based thermal stabilizer, the Ca-Zn-based thermal stabilizer and the Ca-Mg-Zn-based thermal stabilizer, the magnesium ingredient and the calcium ingredient have an effect of improving late thermal stability, and the zinc ingredient has an effect of improving initial thermal stability. Along with the increase in the addition amounts of the magnesium ingredient and the calcium ingredient, the long-term stability becomes better, and in order to prevent the initial red coloring, it is necessary to use the zinc ingredient together. However, if an addition amount of the zinc ingredient becomes too large, so-called zinc burning occurs, therefore attention is needed with respect to the addition amount. In the present invention, magnesium stearate and calcium stearate are preferably used as the magnesium ingredient and the calcium ingredient, and zinc stearate is preferable used as the zinc ingredient.

As the magnesium stearate, a commercially available one is "FACII" manufactured by MIZUSAWA INDUSTRIAL CHEMICALS, LTD., or the like, and as the calcium stearate, a commercially available one is "NT-CI" manufactured by MIZUSAWA INDUSTRIAL CHEMICALS, LTD., or the like. As the zinc stearate, a commercially available one is "NT-Z1" manufactured by MIZUSAWA INDUSTRIAL CHEMICALS, LTD.

As mentioned above, the fire-retardant resin composition according to the present invention contains the synthetic hydrotalcite. The synthetic hydrotalcite used herein has a chemical name of magnesium-aluminum-hydroxide-carbonate-hydrate, and is represented by the following general formula.

$$[Mg_6Al_2(OH)_{16}CO_3 \cdot 4H_2O]$$

The synthetic hydrotalcite used in the present invention has an average particle diameter of preferably 0.1 $\mu$m to 2.0 $\mu$m, more preferably 0.3 $\mu$m to 1.0 $\mu$m. A commercially available synthetic hydrotalcite can also be, for example, "ALCAMIZER 1" manufactured by KYOWA CHEMICAL INDUSTRY CO., LTD., or the like. The average particle diameter defined here is a value of particle diameter in the case where an integrated value represented by integrated (accumulated) percentage is 50 % in particle size distribution.

Furthermore, the borosilicate glass can be added to the fire-retardant resin composition which forms the fire-resistant piping material according to the present invention. Since a softening point of the borosilicate glass is 600 to 800˚C, the residue formed at the time of combustion can be coated by the glass. As the result, supply of oxygen to the residue can be inhibited, and the release, to combustion field, of combustible gases generated from the residue can be inhibited, and thus the flame retardancy of the vinyl chloride-based resin can be drastically improved, thereby contributing to maintaining the shape of the residue formed at the time of combustion. In the present invention, the borosilicate glass has an average particle diameter of preferably 0.01 $\mu$m or more and 250 $\mu$m or less, more preferably 0.1 $\mu$m or more and 100 $\mu$m or less. When the average particle diameter is less than 0.01 $\mu$m, handling property as a powder becomes worse, and when the average particle diameter is more than 250 $\mu$m, since the inorganic compound particles may protrude or take other actions from the surface of the obtained molded article, the appearance of the molded article may become worse. The average particle diameter defined here is a value of particle diameter in the case where an integrated value represented by integrated (accumulated) percentage is 50 % in particle size distribution.
A commercially available borosilicate glass is also, for example, "F-C" manufactured by NISHO MATERIAL CO., LTD.

The blended amount of the borosilicate glass relative to 100 parts by mass of the polyvinyl chloride-based resin is preferably 2 parts by mass or more and 10 parts by mass or less, more preferably 3 parts by mass or more and 8 parts by mass or less, particularly preferably 4 parts by mass or more and 7 parts by mass or less. When the blended amount of the borosilicate is 2 parts by mass or more and 10 parts by mass or less, the fire retardancy of the vinyl chloride-based resin can be drastically improved to realize the aforementioned effect of the present invention.

The fire-retardant resin composition used in the present invention may be added additives such as a thermal stabilizing aid, an inorganic filler, a lubricant, a processing aid, an impact modifier, a heat-resistance-improving agent, an antioxidant, a light stabilizer, an ultraviolet absorber, a pigment, a plasticizer, and a thermoplastic elastomer, within a range not inhibiting the effects of the present invention.

Examples of the thermal stabilizing aids includes, for example, epoxidized soybean oil, phosphate esters, polyols, and the like. These may be used alone, and may be used in combination with two or more kinds.

The lubricant includes an internal lubricant and an external lubricant. The internal lubricant is used for reducing the fluid viscosity of a melting resin during a molding process to prevent friction heat generation. Examples of the internal lubricant include, for example, butyl stearate, lauryl alcohol, stearyl alcohol, epoxidized soybean oil, glycerin monostearate, stearic acid, bisamides, and the like. These may be used alone, and may be used in combination with two or more kinds.

The external lubricant is used for improving sliding effect between a melting resin and a metal surface during a molding process Examples of the external lubricant include, for example, paraffin wax, polyolefin wax, ester wax, montanoic acid wax, and the like. These may be used alone, and may be used in combination with two or more kinds.

The processing aid includes, for example, an acryl-based processing aid such as an alkyl acrylate-alkyl methacrylate copolymer having a weight average molecular weight of 100,000 to 2,000,000. Examples of the acryl-based processing aid include, for example, n-butyl acrylate-methyl methacrylate copolymers and 2-ethylhexyl acrylate-methyl methacrylate-butyl methacrylate copolymers. These may be used alone, and may be used in combination with two or more kinds.

Examples of the impact modifier include, for example, methyl methacrylate-butadiene-styrene (MBS) copolymer, acryl rubber, and the like.

Examples of the heat-resistance-improving agent include, for example, $\alpha$-methylstyrene-based resin, N-phenylmaleimide-based resin, and the like.

Examples of the antioxidant include, for example, a phenol-based antioxidant.

Examples of the light stabilizer include, for example, a hindered amine-based light stabilizer, and the like.

Examples of the ultraviolet absorber include, for example salicylic acid ester-based ultraviolet absorber benzophenone-based ultraviolet absorber, benzotriazole-based ultraviolet absorber, cyanoacrylate-based ultraviolet absorber, and the like.

Examples of the pigment include, for example, organic pigments such as azo-based, phthalocyanine-based, surene-based organic pigments, dye lake-based pigments; and inorganic pigments such as oxide-based, molybdenum chromate-based, sulfides/selenide-based, and ferrocyanide-based inorganic pigments.

To the polyvinyl chloride-based resin, a plasticizer can be added, but since the plasticizer may decrease the heat resistance and fire resistance of the molded article, it is not particularly preferable to use a larger amount of the plasticizer. Examples of the plasticizer to be used include, for example, dibutyl phthalate, di-2-ethylhexyl phthalate, di-2-ethylhexyl adipate, and the like.

Examples of the thermoplastic elastomer include, for example, acrylnitrile-butadiene (NBR) copolymers, ethylene-vinyl acetate (EVA) copolymers, ethylene-vinyl acetate-carbon monoxide (EVACO) copolymers, vinyl chloride-based thermoplastic elastomers such as vinyl chloride-vinyl acetate copolymers and vinyl chloride-vinylidene chloride copolymers, styrene-based thermoplastic elastomers, olefin-based thermoplastic elastomers, urethane-based thermoplastic elastomers, polyester-based thermoplastic elastomers, and polyamide-based thermoplastic elastomers, and the like. These may be used alone, and may be used in combination with two or more kinds.

Examples of the inorganic filler include, for example, silica, diatom earth, alumina, zinc oxide, titanium oxide, calcium oxide, magnesium oxide, iron oxide, tin oxide, antimony oxide, ferrites, calcium hydroxide, aluminum hydroxide, basic magnesium carbonate, calcium carbonate, magnesium carbonate, zinc carbonate, barium carbonate, dornite, hydrotalcite, calcium sulfate, barium sulfate, gypsum fibers, calcium silicate, talc, clay, mica, montmorillonite, bentonite, activated slaty, sepiolite, imogolite, sericite, glass fibers, glass beads, silica-based balloon, aluminum nitride, boron nitride, silicon nitride, carbon black, graphite, carbon fibers, carbon balloon, coke powder, various metal powders, potassium titanate, magnesium sulfate [MOS], lead titanate zirconate, aluminum borate, molybdenum sulfide, silicon carbide, stainless steel fibers, zinc borate, various magnetic powders, slag fibers, fly ash, dehydrated sludge, and the like. When blending the inorganic filler, the shape retention of the residue formed at the time of combustion becomes better. The blending amount of the inorganic filler relative to 100 parts by mass of the polyvinyl chloride-based resin is preferably 0 part by mass or more and 10.0 parts by mass or less, more preferably 3 parts by mass or more and 7.0 parts by mass or less. When the blending amount of the inorganic filler exceeds 10.0 parts by mass, there is possibility that the mechanical strength of the obtained piping material is impaired.

The method for mixing the aforementioned additives with the polyvinyl chloride-based resin is not particularly limited and general methods can be employed. For example, a hot blend method, a cold blend method, or the like can be employed.

The fire-resistant piping material according to the present invention may have a single-layered structure, and may also have a multilayered structure of two or more layers. In the case of the multilayered structure, it is preferable to arrange a layer made of the aforementioned fire-retardant resin composition as a middle layer, and, for example, a multilayered structure having at least an outer layer, the middle layer and an inner layer in this order is preferable. By providing the layer made of the fire-retardant resin composition as the middle layer of the fire-resistant piping material, a desired mechanical strength can be accomplished while exhibiting the fire resistance. In addition, when the layer made of the aforementioned resin composition as the middle layer is arranged, it is possible to produce a multilayered structure having other layer, for example, between the outer layer and the middle layer, or between the middle layer and the inner layer, and types or the like of the other layer can also be appropriately designed depending on the intended use or the like.

In the present invention, the outer layer (outermost layer) and the inner layer (innermost layer) is preferably made of by using a resin composition containing a molybdenum-based smoke suppressant. When the layers made up of by using such the resin composition are arranged in the outer layer and the inner layer, it is possible to give the piping material additional fire-resistance performance. A commercially available molybdenum-based smoke suppressant is also, for example, "SKR808M" manufactured by KIKUTI COLOR CO., LTD. Meanwhile, to the outer layer and the inner layer, there can be added appropriately additives such as a thermal stabilizer, the aforementioned thermal stabilizing aid, inorganic filler, lubricant, processing aid, impact modifier, heat-resistance-improving agent, antioxidant, light stabilizer and ultraviolet absorber.

The thicknesses of each layer such as the outer layer, the middle layer or the inner layer can be appropriately determined depending on the intended use, and the thickness of the middle layer is preferably 60 % or more of the thickness of the piping material (total thickness), more preferably 70 % or more. When the thickness of the middle layer is 70 % or more of the total thickness, the fire resistance can be exhibited sufficiently, and for example, even when the outer layer and the like contain a usual Pd-based thermal stabilizer or the like, sufficient fire resistance can be exhibited. Meanwhile, it is preferable that the outer diameter, the inner diameter, and the like are appropriately determined depending on the intended use, the intended places and the like.

The fire-resistant piping material according to the present invention is formed by using an extrusion molding machine or an injection molding machine that are generally used. The type and the screw shape of the molding machine are not particularly limited and can be freely selected as long as sufficient kneading can be performed in consideration of the tensile strength and the impact strength of the molded article to be obtained, and, for example, an extrusion molding machine which allows continuous molding is preferably employed. Moreover, in case of the fire-resistant piping material of the multilayered structure, a mouth die having multilayered structure usually used in the extrusion molding machine can be used.

In the fire-resistant piping material according to the present invention, it is preferable that, as a result of a fire resistance test conducted in accordance with ISO834-1 (so called as "Fire Resistance Test I" in the present invention, Fire Resistance Test I being explained latter), a temperature of the surface of the piping material at a position of 10 mm from the floor material in a non-heated area does not exceed 100˚C at the time when 60 minutes elapses from the start of the fire resistance test. In addition, in the aforementioned fire resistance test, a smoke generation time of the fire-resistant piping material is preferably 60 minutes or longer. When the smoke generation time is 60 minutes or longer, for example, the fire-resistant piping material according to the present invention can be applied even in the through-holes in building structure to which fire resistance is required, and particularly can be used effectively for through-holes of the fireproof compartment pass-through section where piping is performed by passing through a floor material, and the like.

Namely, when a fire resistance test is conducted according to the evaluation method of ISO834-1, by passing the piping material through a floor material and by heating a heating area under the condition that one end of the piping material is exposed by 300 mm from a heated side surface of the floor material to the heated side and another end of the piping material is exposed by 800 mm from a non-heated side surface of the floor material to the non-heated side, it is preferable that a temperature of the surface of the piping material at a position of 10 mm from the floor material in a non-heated area does not exceed 100˚C at the time when 60 minutes elapses from the start of the fire resistance test. If these conditions are satisfied, it is possible to accomplish high shielding properties. In general, since resin compositions lowers strength of a piping material in high temperature and thus problems of microvibration and impact arise, usually a piping material made of resin compositions is not used in the fireproof compartment. However, if having high shielding properties such as the piping materials of the present invention, the piping material can be used in the fireproof compartment (fireproof compartment pass-through sections).

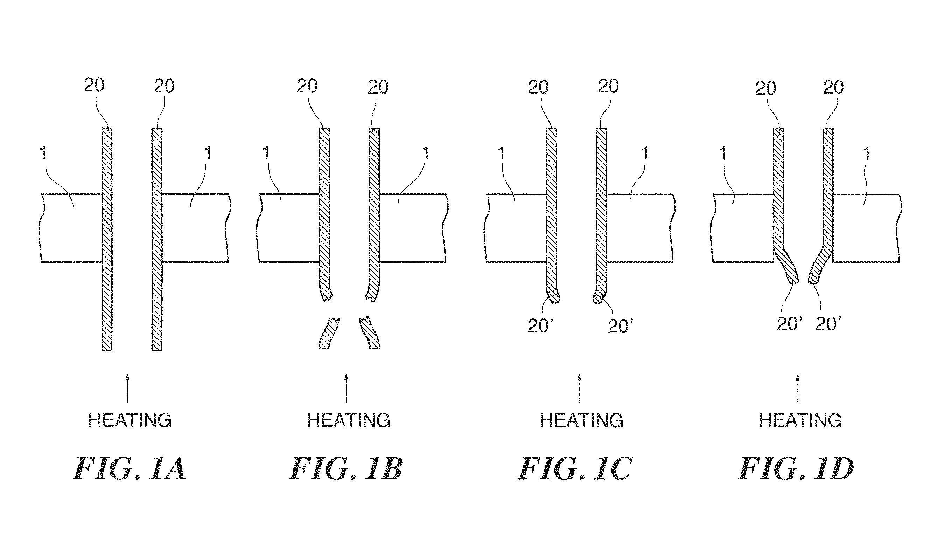

The situation when the piping material according to the present invention is burned, where piping is performed by passing through a floor material as mentioned above, will be explained by referring drawings herein below. Each of Fig.1A to Fig.1D is a schematic sectional view diagrammically illustrating the situation where a pipe-like tube material 20 as the fire-resistant piping material of the present invention is passed through a floor material 1. In Fig.1A to Fig.1D, an area above the floor material 1 is the non-heated side, and an area below the floor material 1 is the heated side. Fig. 1A to Fig.1D are diagrams explaining a state in which a residue is formed by combustion. For example, when heating is performed from the lower side in Fig.1A, the lower tip end of the tube material 20 is separated at least one time to be shortened (see Fig.1B), the diameter of the heated side end $20^1$ of the tube material 20 becomes narrower due to carbonization (see Fig.1C), and when the heating is further continued, the diameter of the heated side end 20' of the tube material 20 becomes further narrower to thereby put the passage of the tube into a state close to a closure (see Fig.1D).
In Fig.1A to Fig.1D, the heated side wend 20' shows the residual portion.

In the fire-resistant piping material according to the present invention, it is preferable that, as a result of the fire resistance test (corresponding to Fire Resistance Test I) conducted in accordance with ISO834-1, there exists a state where an exposed length of the piping material from the floor material 1 at the heated side is shortened at least one time at the length being not zero, and that the exposed length of the piping material from the floor material 1 at the heated side maintains a state of not zero and forms a residue which puts the through-hole into a state close to a closure. Namely, when performing Fire Resistance Test I, it is preferable that the situation is generated, in which the exposed length of the piping material from the floor material 1 at the heated area is shortened at least one time at the length being not zero until smoke generates from a gap.

Here, the state in which the piping material is shortened is different from the usual state in which the conventional piping material is dripped down due to melting or burned down. Namely, the state in which the piping material is shortened means the state in which, while maintaining the exposed length of the piping material from the floor material 1 at the heated side not being zero, the exposed length of the piping material is shortened by sliding off a part of the piping material. One example is a state in which the exposed length of the piping material becomes shortened so that a part of the piping material falls off like sliding-off by peeling off a surface skin portion. In the present invention, although such a partial falling-down takes place at least one time, it is necessary to maintain the exposed length of the piping material from the floor material 1 at the heated side maintains not being zero. Furthermore, the piping material can put the through-hole in a state close to a closure by forming a residue.
Hers, the residue means a carbonized part due to burning of the piping material. Moreover, to put the through-hole in a state close to a closure means that a percentage of the minimum inner opening area of the inner opening of the fire-resistant piping material after the fire resistance test relative to the inner opening area of the fire-resistant piping material before the fire resistance test is 50 % or less, preferably 45 % or less, more preferably 40 % or less, and particularly preferably 30 % or less. The present invention includes the case in which such a numerical value is 0 %, that is, the state in which the through-hole is completely closed.

When heated, conventional piping materials made of resins usually form a flame passage by burning off at once, disappearing before forming any residue, or falling off a large amount of the residue due to its heavy weight even if a residue is formed. Furthermore, by producing a gap due to swelling, there is a case in which a flame passage is formed or takes other actions. In contrast to this, when the piping material is formed by using the fire-retardant resin composition according to the present invention, since the fire-retardant property of the piping material itself is exhibited, it is possible to inhibit the progress of combustion, and to prevent the entrance of flame or smoke into the non-heated area. Furthermore, there is not the case in which the whole of the piping material exposed to the heated side falls off all at once. And, there exists a state in which the exposed length of the piping material is shortened once or more times while maintaining the exposed length not being zero, and also, the residue is formed to thereby put the through-hole in a state close to a closure. Moreover, because of passing through a state in which the exposed length of the piping material is shortened once or more times, it is possible to reduce the weight of the residue, and thus the through-hole can be effectively put into a state close to a closure without falling off a large amount of the residue. As a result, it is possible to inhibit the progress of combustion, and to inhibit the belching of flame and smoke from the heated side.

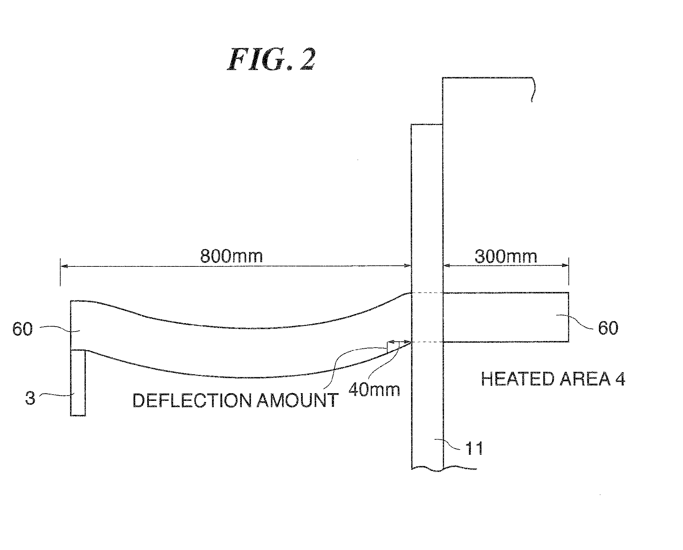

Furthermore, in the fire-resistant piping material according to the present invention, it is preferable that, as a result of a fire resistance test conducted in accordance with ISO834-1 (so called as "Fire Resistance Test IV" here, Fire Resistance Test IV being explained later), a residue is formed, the formed residue is not burned out to thereby remain at the end of tube, and a period of time during which a downward deflection amount of the piping material at a position of 40 mm from the wall in a non-heated area reaches 5 mm or more is 60 minutes or longer from the start of the fire resistance test. Namely by explaining through the use of Fig.2, when, in accordance with the evaluation method of ISO834-1, a fire resistance test is conducted by passing through a wall material 11, and by heating a heating area under the condition that one end of the tube material 60 is exposed by 300 mm from a heated side surface of the wall material 11 to the heated side and another end of the tube material 60 is exposed by 800 mm from a non-heated side surface of the wall material 11 to the non-heated side, it is preferable that a residue is formed, and a period of time during which a downward deflection amount of the piping material at a position of 40 mm from the wall material 11 in a non-heated area reaches 5 mm or more is 60 minutes or longer from the start of the fire resistance test. In addition, in the aforementioned fire resistance test, a smoke generation time of the fire-resistant piping material is preferably 60 minutes or longer. When the smoke generation time is 60 minutes or longer, for example, the fire-resistant piping material according to the present invention can be applied even in the case of through-holes in building structure to which fire-resistant ability is required, and particularly can be used effectively for through-holes of the fireproof compartment pass-through section where piping is performed by passing through a floor material, and the like.

In the piping material according to the present invention, the piping material of the heated side forms a residue which puts the through-hole into a state close to a closure, and the fire-retardant effect of the synthetic hydrotalcite and the like can be exhibited effectively, whereby the spread of flame and smoke to the non-heated area can be prevented. Furthermore, in general, in resin compositions, the strength of a piping material is lowered at a high temperature, and the strength of the piping material of the non-heated area is also lowered to yield a downward deflection, usually a piping material made up of resin compositions is not used in the fireproof compartment section. However, if the piping material has a small deflection amount like in the case of the present invention, i.e. if the piping material satisfies the condition that a downward deflection amount at 40 mm from the wall material in a non-heated area is less than 5 mm even if 60 minutes passes from the start of the fire resistance test, such a material can be used in the fireproof compartment section.

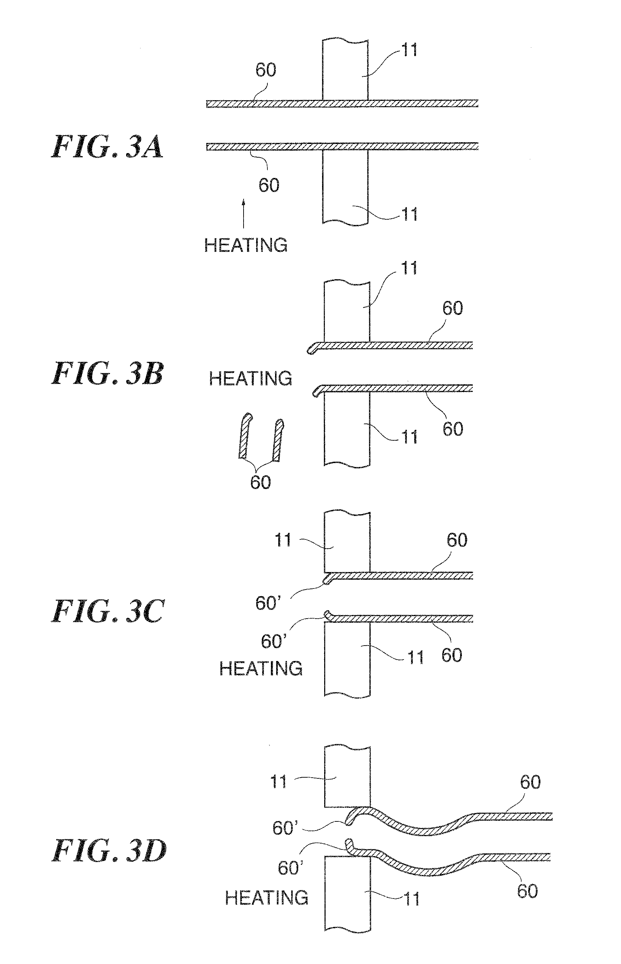

The situation at the combustion state of the piping material will be explained by referring drawings herein below. Each of Fig.3A to Fig.3D is a schematic sectional view diagrammically illustrating a state in which piping is performed by passing a pipe-like tube material 60 as the fire-resistant piping material of the present invention through a wall material 11.

Fig.3A to Fig.3D are diagrams explaining a state in which a residue is formed by combustion. For example, when heating is performed from the left side of the wall material 11 as shown in Fig.3A, the left tip end of the tube material 60 falls down at least one time to be shortened (see Fig.3B), the diameter of the heated side end 60' of the tube material 60 becomes narrower due to carbonization (see Fig.3C) and when the heating is further continued, the diameter of the heated side end 60' becomes further narrower to thereby put the passage of the tube in a state close to a closure (see Fig.3D). Thus, the formed residue is not burned out and remains for a certain period of time.

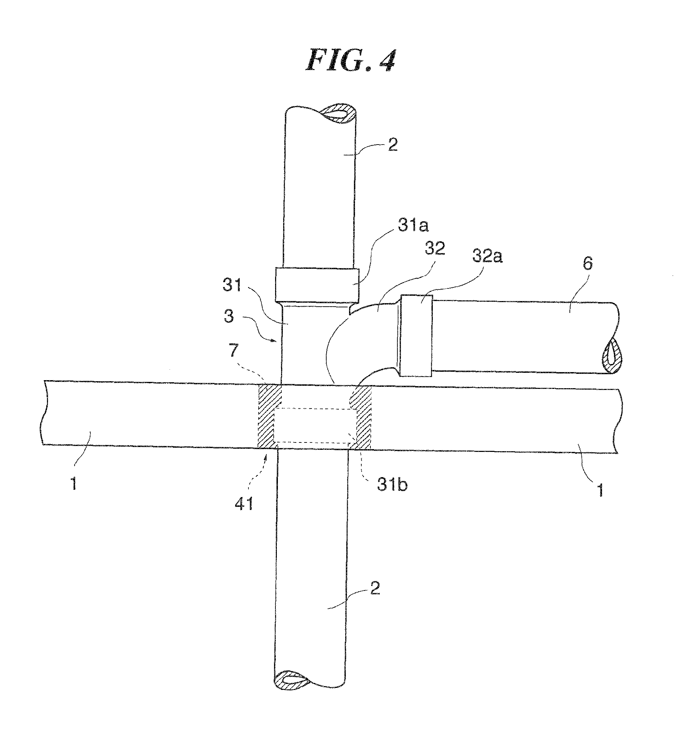

The fire-resistant piping material according to the present invention can be used as, for example, a piping such as a pipe for electric wires, a drain pipe or a duct, installed in building structure, and piping is performed by passing through the building structure in buildings or the like, and thus a piping structure capable of achieving excellent fire properties can be accomplished. For example, the piping in building structure includes usually a pipe for vertical use, a pipe joint, a pipe for transverse pipe, and the like, and the fire-resistant piping material according to the present invention can be molded into any kind of shape thereof. Specific explanation will be done by referring Fig.4. A main tube 31 of pipe joint in a pipe joint 3 has an upper socket 31a and a lower socket 31b in which a pipe 2 for vertical use ca be fit, and is a tube-like having an inner diameter which is approximately the same as the pipe 2 for vertical use, and, a connection part 32 of transverse tube is connected to the middle portion thereof in the communicating manner. The connection part 32 of transverse tube has a socket 32a which can be engaged with a pipe 6 for transverse tube. In addition, the fire-resistant piping material according to the present invention can be engaged with a usual piping, and as necessary, the piping material according to the present invention can be arranged.

In general, piping in buildings is carried out as follows. Namely, the lower socket 31b provided with the lower end portion of the main body in the pipe joint 3 is positioned so as to face a through-hole 41 in the floor slab (floor material) 1, and after jointing the lower socket 31b in the pipe joint 3 to an upper end portion of the pipe 2 for vertical use within the through-hole, a gap between the through-hole 41 and the pipe joint is filled with a mortar 7. Next, a lower end portion of the pipe 2 for vertical use is jointed to the upper socket 31a provided with the upper end portion of the main body in the pipe joint 3, the pipe 6 for transverse tube is jointed to a socket 32a of the connection part 32 of transverse tube provided with the pipe joint 3.

For example, when the fire takes place on a certain floor and the pipe for vertical drain use and the pipe of transverse drain tube are exposed to flame, if the pipe for vertical use and the pipe of transverse tube themselves are pipes that exhibit the fire combustion delay effect so as to have functions such as heat shielding, flame shielding and smoke shielding, it is possible to prevent the entrance of heat, flame, and smoke to the other floor and the other compartment and to prevent the spread of burning. In addition, if the pipe for vertical use and the pipe of transverse tube themselves exhibit the fire combustion delay effect, since the pipe joint itself can be protected from burning, no gap is produced between the pipe joint and the mortar filled in the through-hole, it is possible to prevent inflow of smoke, heat, and flame to the other floor and the other compartment for a long time.

And, for example, when the pipe for transverse tube is exposed to flame, if the downward deflection amount of the pipe for transverse tube in the non-heated area is small, that is, if it takes 60 minutes or longer for the deflection amount at a position of 40 mm from the wall material to reach 5 mm or more, there is no gap generated in the through-hole, and it is possible to prevent the spread of flame and smoke.

Since the fire-resistant piping material according to the present invention is formed by using the fire-retardant resin composition which contains a polyvinyl chloride-based resin, the Ca-Zn-based thermal stabilizer, the Mg-Zn-based thermal stabilizer, the Ca-Mg-Zn-based thermal stabilizer and the synthetic hydrotalcite compound, the piping material has excellent moldability, and can be produced continuously with dimensional accuracy, for example, by injection molding, extrusion molding, and the like.

Since the polyvinyl chloride-based resin which composes the fire-resistant piping material according to the present invention can be foamed in the initial stage of combustion, the piping material is excellent in heat shielding property and has self fire extinguishing property to effectively exhibit the delay of the combustion velocity, and thus, it is possible to suppress a spreading speed of flame at the time of combustion. In addition, by further blending the Ca-Zn-based thermal stabilizer, the Mg-Zn-based thermal stabilizer, the Ca-Mg-Zn-based thermal stabilizer, the self-fire-extinguishing property can be further improved, and by further blending the synthetic hydrotalcite, the fire retardancy can be improved due to endothermic effect.

Thus, the fire-resistant piping material according to the present invention can put the passage into a state close to a closure at the time of combustion because the piping material itself has excellent fire resistance, and also, the piping material exhibits the delay effect of the combustion velocity, therefore, it is possible to inhibit the spread of flame and smoke to the other side (non-burned part) separated by the compartment pass-through section.

Accordingly, since it is not necessary to provide a fire-resistant material around the piping material like in the case of the conventional manner, piping work is easy. In addition, through the use of the fire-resistant piping material according to the present invention, the marking work for positional acknowledgement which is required at provisional piping work during conventional field working is not necessary, piping work can be done by simply passing the fire-resistant piping material through the compartment pass-through section. Therefore, the piping work steps can be remarkably decreased and the field workability can be drastically improved. Moreover, since the fire-resistant piping material according to the present invention can reduce an outer diameter of the tube in comparison with a conventional tube, so called a fire-resistant double layered tube which is produced by coating an outer periphery of a pipe made of vinyl chloride resin with a fiber-reinforced mortar, there are advantages that, even if plural through-holes are necessary, it is possible to provide the through-holes at a small distance, and it becomes easier to generate a gradient in the case of performing piping under the floor, thus breakthrough improvement in field workability was given.

In the present invention, a borosilicate glass can be additionally blended to the resin composition which forms the fire-resistant resin composition, whereby the fire-retardant effect can be enhanced, and with respect to the residue formed at the time of combustion, shape retaining property can be exhibited.

In addition, when the fire-resistant piping material is composed of multilayered structure and a middle layer is made of the aforementioned fire-retardant resin composition, a desired mechanical strength can also be accomplished while exhibiting the fire resistance. Moreover, when the outer layer and the inner layer are made of the polyvinyl chloride-based resin composition which contains the molybdenum-based smoke suppressant, it is possible to impart additional fire resistance.

EXAMPLES

The present invention will be explained in detail by referring EXAMPLES, and the present invention is not limited to those EXAMPLES. Various measurement values and evaluation methods in EXAMPLES were obtained by the measurement and evaluation through the use of the following methods.

<<EXAMPLE I>>

Evaluation method:

(1) Evaluation of fire-resistance performance

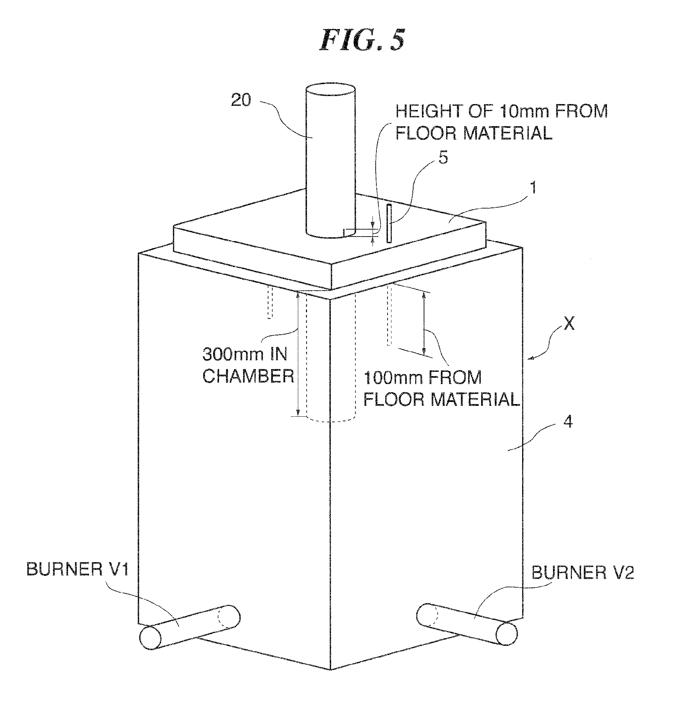

Evaluation method of fire resistance test: According to ISO834 by using a fire resistance test furnace X (see Fig.5), Fire Resistance Test I was conducted in the followings.
Samples to be evaluated were pipe-like tube materials newly fabricated, one tube being of length 1,300 mm, outer diameter 140 mm, thickness 7.5 mm, nominal diameter 125 A, and the other tube being of length 1,300 mm, outer diameter 114 mm, thickness 7.1 mm, nominal diameter 100 A.
In Fig.5, an autoclaved lightweight concrete board (length 600 mm x width 600 mm x thickness 150 mm) was used as a floor material 1. As the fire proof structure method, the gap between the pipe (tube material) 20 and the compartment pass-through section was sealed with mortar.
The pipe 20 was arranged so that one end of the pipe 20 was exposed to the heated area (heated chamber) 4 by 300 mm from the surface of the heated side of the floor material 1, and the other end was exposed to the non-heated area by 800 mm from the surface of the non-heated side of the floor material. At two points on the inner side wall of the heated chamber 4 of the fire resistance test furnace X, burners (V1, V2) were provided. In addition, two thermal contacts of a thermocouple 5 inside the furnace were installed at positions apart from the floor material by 100 mm so as be arranged evenly with respect to the test surface of the floor material 1 and another thermocouple is also installed for measuring a temperature of the surface of the pipe 20 positioned at a height of 10 mm from the autoclaved lightweight concrete board (floor material). Furthermore, the fire resistance test furnace X was equipped with an apparatus (not shown) for measuring pressure in the furnace.
The fire resistance test furnace was operated by using two burners so that a time lapse of the heated temperature satisfies the numerical value represented by the following equation.

$$345 \times \log(8 \times T + 1) + 20 \qquad T: \text{Time (min.)}$$

After the start of heating, a time to be required for the generation of smoke from a gap between the compartment pass-through section and the tube material (smoke generation time) was measured. A case in which no smoke is generated for 120 minutes or longer corresponds to an acceptable level. The generation of smoke (smoke generation) was determined with the naked eye.

(2) Evaluations of physical properties

In accordance with the tensile test of JIS K6741, a molded article was subjected to the tensile test at a temperature of 23°C, and a tensile strength and elongation were measured. In addition, 1/2 flattening test (n=2) was carried out in accordance with JIS K6741. With respect to the evaluation of the 1/2 flattening test, the presence of crack was determined, and evaluation was done by a number of cracks. It should be noted that, as to the tensile strength, an acceptable level is 40 MPa or more.
Furthermore, as to the elongation (%), an acceptable level is 50 % or more.

(3) Comprehensive evaluation

In respect to the evaluation results mentioned above, comprehensive evaluations were shown in TABLE. Namely, the symbol "o" represents a case in which a smoke generation time is 120 minutes or longer, no cracking is caused in the 1/2 flattening test (a number of cracks is 0), a tensile strength is 40 MPa or more, and an elongation satisfies 50 % or more. The symbol "X" represents a case in which even at least one of the above conditions is not satisfied.

[EXAMPLE I-1]

A resin composition for middle layer was prepared by blending 0.2 part by mass of magnesium stearate, 0.8 part by mass of zinc stearate and 5 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). The obtained resin composition for middle layer was used for forming a middle layer. A resin composition prepared by blending 2.0 parts by mass of lead stearate ("NC18ED" manufactured by MIZUSAWA INDUSTRIAL CHEMICALS, LTD.) and 1.0 part by mass of a molybdenum-based smoke suppressant relative to 100 parts by mass of a polyvinyl chloride resin being polyvinyl chloride homopolymer (average degree of polymerization: 1030) was used for each of an outer layer and an inner layer. By using the obtained resin composition for middle layer and the obtained resin composition for outer and inner layer, a pipe-like tube material (length 1,300 mm, outer diameter 140 mm, thickness 7.5 mm, nominal diameter 125 A, thickness of middle layer 80 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-2]

A resin composition for middle layer was prepared by blending 0.2 part by mass of magnesium stearate, 0.8 part by mass of zinc stearate, 6 parts by mass of borosilicate glass having an average particle diameter of 20 $\mu$m and 5 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) and 1.0 part by mass of a molybdenum-based smoke suppressant relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material for vertical use (length 1,300 mm, outer diameter 140 mm, thickness 7.5 mm, nominal diameter 125 A, thickness of middle layer 80 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-3]

A resin composition for middle layer was prepared by blending 0.1 part by mass of magnesium stearate, 0.4 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-4]

A resin composition for middle layer was prepared by blending 0.15 part by mass of magnesium stearate, 0.6 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-5]

A resin composition for middle layer was prepared by blending 0.2 part by mass of magnesium stearate, 0.8 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 140 mm, thickness 7.5 mm nominal diameter 125 A, thickness of middle layer 80 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-6]

A resin composition for middle layer was prepared by blending 0.3 part by mass of magnesium stearate, 1.2 parts by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-7]

A resin composition for middle layer was prepared by blending 0.4 part by mass of magnesium stearate, 1.6 parts by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter, 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE 1-8]

As shown in TABLE 1, a resin composition for middle layer was prepared by blending 0.1 part by mass of magnesium stearate, 0.8 part by mass (0.4 part by mass + 0.4 part by mass) of zinc stearate, 0.1 part by mass of calcium stearate, 6 parts by mass of borosilicate glass having an average particle diameter of 20 $\mu$m and 3.6 parts by mass of a synthetic hydrotalcite

(magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-9]

A resin composition for middle layer was prepared by blending 0.2 part by mass of calcium stearate, 0.8 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prpepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-10]

A resin composition was prepared by blending 0.2 part by mass of magnesium stearate, 0.8 part by mass of zinc stearate and 10 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 140 mm, thickness 7.5 mm, nominal diameter 125 A) having a single-layered structure was formed by extrusion molding. The obtained tube material was subjected to the evaluation of fire-resistance performance and the evaluation of physical properties. The results obtained are shown in TABLE 1.

[EXAMPLE I-11]

A resin composition for middle layer was prepared by blending 0.2 part by mass of magnesium stearate, 0.8 part by mass of zinc stearate, 4 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the resin composition for middle layer and the resin composition for outer and inner layer into an extrusion molding machine, a pipe-like tube material (length 1, 300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[EXAMPLE I-12]

A resin composition for middle layer was prepared by blending 0.2 part by mass of magnesium stearate, 0.8 part by mass of zinc stearate, 8 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the resin composition for middle layer and the resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance and the evaluation of physical properties. The results obtained are shown in TABLE 1.

[COMPARATIVE EXAMPLE I-1]

A resin composition was prepared by blending 0.2 part by mass of magnesium stearate and 0.8 part by mass of zinc stearate relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 114 mm, thickness 7.1 mm, nominal diameter 100 A) having a single-layered structure was formed by extrusion molding. The obtained tube material was subjected to the evaluation of fire-resistance performance. The results obtained are shown in TABLE 2.

[COMPARATIVE EXAMPLE I-2]

A polyvinyl chloride tube having a single-layered structure which contains lead and is commercially available as a usual pipe (2 parts by mass of Pb-based thermal stabilizer was blended relative to 100 parts by mass of PVC, length 1,300 mm, outer diameter 140 mm, thickness 7.5 mm, nominal diameter 125 A) was subjected to the evaluation of fire-resistance performance. The results obtained are shown in TABLE 2.

[COMPARATIVE EXAMPLE I-3]

A polyvinyl chloride tube having a single-layered structure which contains a heat expandable graphite and has fire-resistance performance of 2 hours as a tube made of synthetic resin (1.0 part by mass of Pb-based thermal stabilizer and 5.0 parts by mass of heat expandable graphite were blended relative to 100 parts by mass of PVC, length 1,300 mm, outer diameter 140 mm, thickness 7.5 mm, nominal diameter 125 A) was formed, and the obtained tube material was subjected to the evaluation of physical properties. The results obtained are shown in TABLE 2.

[COMPARATIVE EXAMPLE I-4]

A resin composition was prepared by blending 0.2 part by mass of magnesium stearate, 0.8 part by mass of zinc stearate and 15 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 140 mm, thickness 7.5 mm, nominal diameter 125 A) having a single-layered structure was formed by extrusion molding. The obtained tube material was subjected to the evaluation of fire-resistance performance and the evaluation of physical properties. The results obtained are shown in TABLE 2.

[TABLE 1]

[Table 1]

| | Example I | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| PVC | 100 | 100 | 100 | 100 | 100 | 100 | 100 | 100 | 100 | 100 | 100 | 100 |
| Mg-Zn-based thermal stabilizer | 1 | 1 | 0.5 | 0.75 | 1 | 1.5 | 2 | 0.5 | 0 | 1 | 1 | 1 |
| Ca-Zn-based thermal stabilizer | 0 | 0 | 0 | 0 | 0 | 0 | 0 | 0.5 | 1 | 0 | 0 | 0 |
| Pb-based thermal stabilizer | 0 | 0 | 0 | 0 | 0 | 0 | 0 | 0 | 0 | 0 | 0 | 0 |
| Heat expandable graphite | 0 | 0 | 0 | 0 | 0 | 0 | 0 | 0 | 0 | 0 | 0 | 0 |
| Synthetic hydrotalcite | 5 | 5 | 3.6 | 3.6 | 3.6 | 3.6 | 3.6 | 3.6 | 3.6 | 10 | 3.6 | 3.6 |
| Borosilicate glass | 0 | 6 | 6 | 6 | 6 | 6 | 6 | 6 | 6 | 0 | 4 | 8 |
| Smoke generation time (min) | 143 | 150 | >120 | >120 | >120 | >120 | >120 | >120 | >120 | 150 | >120 | >120 |
| 1/2 Flattening test (n=2) | 0 | 0 | 0 | 0 | 0 | 0 | 0 | 0 | 0 | 0 | 0 | 0 |
| Tensile strength (MPa) | 50 | 48 | 49 | 47 | 46 | 46 | 48 | 48 | 47 | 45 | 50 | 49 |
| Elongation (%) | 71 | 59 | 89 | 97 | 116 | 118 | 68 | 70 | 56 | 60 | 127 | 115 |
| Comprehensive evaluation | ○ | ○ | ○ | ○ | ○ | ○ | ○ | ○ | ○ | ○ | ○ | ○ |
| Unit of blended amount: Part by mass | | | | | | | | | | | | |

[TABLE 2]

| | Comparative Example I | | | |
|---|---|---|---|---|
| | 1 | 2 | 3 | 4 |
| PVC | 100 | 100 | 100 | 100 |
| Mg-Zn-based thermal stabilizer (Part by mass)' | 1 | 0 | 0 | 1 |
| Ca-Zn-based thermal stabilizer (Part by mass) | 0 | 0 | 0 | 0 |
| Pb-based thermal stabilizer (Part by mass) | 0 | 2 | 1 | 0 |
| Heat expandable graphite (Part by mass) | 0 | 0 | 5 | 0 |
| Synthetic hydrotalcite (Part by mass) | 0 | 0 | 0 | 15 |
| Borosilicate glass (Part by mass) | 0 | 0 | 0 | 0 |
| Smoke generation time (min) | 77 | 60 | - | 45 |
| 1/2 Flattening test (n=2) | - | - | One | Two |
| Tensile strength (MPa) | - | - | 48 | 42 |
| Elongation (%) | - | - | 15 | 76 |
| Comprehensive evaluation | x | x | x | x |

As is clear from STABLE 1, it has been found that the tube materials of EXAMPLES, 1 to 12 were excellent in all evaluations of the physical properties such as moldability and mechanical strength and the fire resistance, and that the spread of flame and smoke to the non-heated area separated by the floor material at the time of combustion can be suppressed for a long time. It should be noted that the similar effects can also be obtained with respect to the pipe-like tube material having a three-layered structure made up by using a Ca-Mg-Zn-based thermal stabilizer.
In contrast, it has been found that the tube materials of COMPARATIVE EXAMPLES 1, 2, 4 have a short smoke generation time and are inferior in fire resistance. In addition, it has been found that the tube material of COMPARATIVE EXAMPLE 3 is inferior in moldability, has a small elongation, and is inferior in mechanical strength because of the cracking caused in the 1/2 flattening test.

The piping material according to the present invention has fire-resistance performance of exceeding 2 hours, thereby being able to exhibit excellent performances which have not been found conventionally.
It should be noted that, in the EXAMPLES, although the nominal diameters of the tube materials were set as 125 A and 100 A, the similar effects can be obtained with respect to other nominal diameters. In addition, the tube materials of EXAMPLES 1 to 12 can be colored since they do not contain any heat expandable graphite, and are excellent in recycling property.

<<EXAMPLE II>>

Evaluation method:

The smoke generation time was measured in the same manner as in the evaluation of fire-resistance performance (1) of EXAMPLE I, that is, by performing the Fire Resistance Test I through the use of the fire resistance test furnace X showed in Fig.5. A case in which no smoke is generated for 120 minutes or longer corresponds to an acceptable level. The generation of smoke (smoke generation) was determined with the naked eye.

However, samples to be evaluated are pipe-like tube materials newly fabricated, one tube material being of length 1,300 mm, outer diameter 140 mm, thickness 7.5 mm, nominal diameter 125 A, and other tube material being of length 1,300 mm, outer diameter 114 mm, thickness 7.1 mm, nominal diameter 100 A.

In addition, a number of times during which the tube material exposed in the heated area becomes shorter was determined. For example, if a state where the tube material becomes shorter so as to slide off a part of the tube has been generated, the number of times during which the tube becomes shorter is counted as one time. The determination was carried out until smoke was generated, and the number of times during which the tube becomes shorter was obtained.

In addition, it was observed whether or not a residue blocking a through-hole was formed. The symbol "o" represents the case in which such a residue was formed, and the symbol "X" represents the case in which such a residue was not formed.

Furthermore, in respect to the evaluation results mentioned above, comprehensive evaluations were shown in TABLE. Namely, the symbol "o" represents a case in which a smoke generation time is 120 minutes or longer, and a given amount of the residue was formed. The symbol "X" represents a case in which even at least one of the above conditions is not satisfied.

[EXAMPLE II-1]

A resin composition for middle layer was prepared by blending 0.2 part by mass of magnesium stearate, 0.8 part by mass of zinc stearate and 5 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). The obtained resin composition for middle layer was used for forming an middle layer. A resin composition used for each of an outer layer and an inner layer was prepared by blending 2.0 parts by mass of lead stearate ("NC18ED" manufactured by MIZUSAWA INDUSTRIAL CHEMICALS, LTD.) and 1.0 part by mass of a molybdenum-based smoke suppressant relative to 100 parts by mass of a polyvinyl chloride resin being polyvinyl chloride homopolymer (average degree of polymerization: 1030). By using the resin composition for middle layer and the resin composition for outer and inner layer, a pipe-like tube material (length 1,300 mm, outer diameter 140 mm, thickness 7.5 mm, nominal diameter 125 A, thickness of middle layer 80 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-2]

A resin composition for middle layer was prepared by blending 0.2 part by mass of magnesium stearate, 0.8 part by mass of zinc stearate, 6 parts by mass of borosilicate glass having an average particle diameter of 20 $\mu$m and 5 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) and 1.0 part by mass of a molybdenum-based smoke suppressant relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 140 mm, thickness 7.5 mm, nominal diameter 125 A, thickness of middle layer 80 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-3]

A resin composition for middle layer was prepared by blending 0.1 part by mass of magnesium stearate, 0.4 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-4]

A resin composition for middle layer was prepared by blending 0.15 part by mass of magnesium stearate, 0.6 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-5]

A resin composition for middle layer was prepared by blending 0.2 part by mass of magnesium stearate, 0.8 part by mass of zinc stearate, 6 parts by mass of borosilicate glass having an average particle diameter of 20 μm and 3.6 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 140 mm, thickness 7.5 mm, nominal diameter 125 A, thickness of middle layer 80 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-6]

A resin composition for middle layer was prepared by blending 0.3 part by mass of magnesium stearate, 1.2 parts by mass of zinc stearate, 6 parts by mass of borosilicate glass having an average particle diameter of 20 μm and 3.6 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-7]

A resin composition for middle layer was prepared by blending 0.4 part by mass of magnesium stearate, 1.6 parts by mass of zinc stearate, 6 parts by mass of borosilicate glass having an average particle diameter of 20 μm and 3.6 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-8]

As shown in TABLE 1, a resin composition for middle layer was prepared by blending 0.1 part by mass of magnesium stearate, 0.8 part by mass (0.4 part by mass + 0.4 part by mass) of zinc stearate, 0.1 part by mass of calcium stearate, 6 parts by mass of borosilicate glass having an average particle diameter of 20 $\mu$mand 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-9]

A resin composition for middle layer was prepared by blending 0.2 part by mass of calcium stearate, 0.8 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-10]

A resin composition was prepared by blending 0.2 part by mass of magnesium stearate, 0.8 part by mass of zinc stearate and 10 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 140 mm, thickness 7.5 mm, nominal diameter 125 A) having a single-layered structure was formed by extrusion molding. The obtained tube material was subjected to the evaluation of fire-resistance performance. The results obtained are shown in TABLE 3.

[EXAMPLE II-11]

A resin composition for middle layer was prepared by blending 0.2 part by mass of magnesium stearate, 0.8 part by mass of zinc stearate, 4 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material for vertical use (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[EXAMPLE II-12]

A resin composition for middle layer was prepared by blending 0.2 part by mass of magnesium stearate, 0.8 part by mass of zinc stearate, 8 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 3.

[COMPARATIVE EXAMPLE II-1]

A resin composition was prepared by blending 0.2 part by mass of magnesium stearate and 0.8 part by mass of zinc stearate relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 114 mm, thickness 7.1 mm, nominal diameter 100 A) having a single-layered structure was formed by extrusion molding. The obtained tube material was subjected to the evaluation of fire-resistance performance. The results obtained are shown in TABLE 4.

[COMPARATIVE EXAMPLE II-2]

A polyvinyl chloride tube having a single-layered structure which contains lead and is commercially available as a usual pipe (2 parts by mass of Pb-based thermal stabilizer was blended relative to 100 parts by mass of PVC, length 1, 300 mm, outer diameter 140 mm, thickness 7.5 mm, nominal diameter 125 A) was subjected to the evaluation of fire-resistance performance. The results obtained are shown in TABLE 4.

[COMPARATIVE EXAMPLE II-3]

A resin composition was prepared by blending 0.2 part by mass of magnesium stearate, 0.8 part by mass of zinc stearate and 15 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 140 mm, thickness 7.5 mm, nominal diameter 125 A) having a single-layered structure was formed by extrusion molding. The obtained tube material was subjected to the evaluation of fire-resistance performance. The results obtained are shown in TABLE 4.

[Table 3]

| | Example II | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| PVC | 100 | 100 | 100 | 100 | 100 | 100 | 100 | 100 | 100 | 100 | 100 | 100 |
| Mg-Zn-based thermal stabilizer | 1 | 1 | 0.5 | 0.75 | 1 | 1. 5 | 2 | 0.5 | 0 | 1 | 1 | 1 |
| Ca-Zn-based thermal stabilizer | 0 | 0 | 0 | 0 | 0 | 0 | 0 | 0.5 | 1 | 0 | 0 | 0 |
| Pb-based thermal stabilizer | 0 | 0 | 0 | 0 | 0 | 0 | 0 | 0 | 0 | 0 | 0 | 0 |
| Heat expandable graphite | 0 | 0 | 0 | 0 | 0 | 0 | 0 | 0 | 0 | 0 | 0 | 0 |
| Synthetic hydrotalcite | 5 | 5 | 3.6 | 3.6 | 3.6 | 3.6 | 3.6 | 3.6 | 3.6 | 10 | 3.6 | 3.6 |
| Borosilicate glass | 0 | 6 | 6 | 6 | 6 | 6 | 6 | 6 | 6 | 0 | 4 | 8 |
| Number of times of shortening length of piping material (Times) | 5 | 3 | 2 | 1 | 1 | 3 | 1 | 2 | 3 | 4 | 3 | 1 |
| Smoke generation time (min) | 143 | 150 | >120 | >120 | >120 | >120 | >120 | >120 | >120 | 150 | >120 | >120 |
| Residue formation | ○ | ○ | ○ | ○ | ○ | ○ | ○ | ○ | ○ | ○ | ○ | ○ |
| Comprehensive evaluation | ○ | ○ | ○ | ○ | ○ | ○ | ○ | ○ | ○ | ○ | ○ | ○ |
| Unit of blended amount: Part by mass | | | | | | | | | | | | |

[TABLE. 4]

| | Comparative Example II | | |
|---|---|---|---|
| | 1 | 2 | 3 |
| PVC (Part by mass) | 100 | 100 | 100 |
| Mg-Zn-based thermal stabilizer (Part by mass) | 1 | 0 | 1 |
| Ca-Zn-based thermal stabilizer (Part by mass) | 0 | 0 | 0 |
| Pb-based thermal stabilizer (Part by mass) | 0 | 2 | 0 |
| Heat expandable graphite (Part by mass) | 0 | 0 | 0 |
| Synthetic hydrotalcite (Part by mass) | 0 | 0 | 15 |
| Borosilicate glass (Part by mass) | 0 | 0 | 0 |
| Number of times of shortening length of piping material (Times) | 0 | 1 | 0 |
| Smoke generation time (min) | 77 | 60 | 45 |
| Residue formation | X | x | x |
| Comprehensive evaluation | X | x | x |

As is clear from TABLE 3, it has been found that the piping materials of EXAMPLES 1 to 12 were excellent in all of the physical properties such as moldability and mechanical strength and the fire resistance, and that the spread of flame and smoke to the non-heated area separated by the floor material at the time of combustion can be suppressed for a long time.

In contrast, as is clear from TABLE 4, it has been found that the tube materials of COMPARATIVE EXAMPLES, 1 to 3 has a short smoke generation time and are inferior in fire resistance.

The piping material according to the present invention has fire-resistance performance of exceeding 2 hours, thereby being able to exhibit excellent performances which have not been found conventionally.

It should be noted that, in the EXAMPLES, although the nominal diameters of the tube materials were set as 100 A and 125 A, the similar effects can be obtained with respect to other nominal diameters. In addition, the tube materials of EXAMPLES 1 to 12 can be colored since they do not contain any heat expandable graphite, and are excellent in recycling property.

<<EXAMPLE III>>

The tube materials (EXAMPLES III-1 to 12, COMPARATIVE EXAMPLES III-1 to 3) were formed in the same manner as in the tubes (EXAMPLES II-1 to 12, COMPARATIVE EXAMPLES II-1 to 3) formed in EXAMPLE II. The obtained tube materials were subjected to the following evaluations.

Evaluation method:

The smoke generation time was measured in the same manner as in the evaluation of fire-resistance performance (1) of EXAMPLE I, that is, by performing the Fire Resistance Test I through the use of the fire resistance test furnace X showed in Fig.5. A case in which no smoke is generated for 120 minutes or longer corresponds to an acceptable level and is represented by "o", and a case that does not reach an acceptable level is represented by "X". It should be noted that the generation of smoke (smoke generation) was determined with the naked eye.

However, samples to be evaluated are pipe-like tube materials newly fabricated, one tube material being of length 1,300 mm, outer diameter 140 mm, thickness 7.5 mm, nominal diameter 125 A, and the other tube material being of length 1,300 mm, outer diameter 114 mm, thickness 7.1 mm, nominal diameter 100 A.

In addition, a surface temperature of the tube after 60 minutes from the start of combustion was measured.

Furthermore, in respect to the evaluation results mentioned above, comprehensive evaluations were shown in TABLE. Namely, in the fire resistance test mentioned above, the symbol "o" represents one which satisfies a case in which a smoke generation time is 120 minutes or longer, the surface temperature of the tube after 60 minutes from the start of combustion is 100˚C or lower, and the heat shield effect was able to be exerted. The symbol "X" represents a case in which even one of the above conditions is not satisfied.

The results are shown in TABLE 5 and TABLE 6.

[TABLE 5]

[Table 5]

| | Example III | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| PVC | 100 | 100 | 100 | 100 | 100 | 100 | 100 | 100 | 100 | 100 | 100 | 100 |
| Mg-Zn-based thermal stabilizer | 1 | 1 | 0.5 | 0.75 | 1 | 1.5 | 2 | 0.5 | 0 | 1 | 1 | 1 |
| Ca-Zn-based thermal stabilizer | 0 | 0 | 0 | 0 | 0 | 0 | 0 | 0.5 | 1 | 0 | 0 | 0 |
| Pb-based thermal stabilizer | 0 | 0 | 0 | 0 | 0 | 0 | 0 | 0 | 0 | 0 | 0 | 0 |
| Heat expandable graphite | 0 | 0 | 0 | 0 | 0 | 0 | 0 | 0 | 0 | 0 | 0 | 0 |
| Synthetic hydrotalcite | 5 | 5 | 3.6 | 3.6 | 3.6 | 3.6 | 3.6 | 3.6 | 3.6 | 10 | 3.6 | 3.6 |
| Borosilicate glass | 0 | 6 | 6 | 6 | 6 | 6 | 6 | 6 | 6 | 0 | 4 | 8 |
| Surface temperature of tube after 60 minutes (˚C) | 79 | 90 | 83 | 85 | 80 | 78 | 81 | 84 | 79 | 98 | 88 | 92 |
| Smoke generation time (min) | 143 | 150 | >120 | >120 | >120 | >120 | >120 | >120 | >120 | 150 | >120 | >120 |
| 2 hours fire resistance test | ○ | ○ | ○ | ○ | ○ | ○ | ○ | ○ | ○ | ○ | ○ | ○ |
| Comprehensive evaluation | ○ | ○ | ○ | ○ | ○ | ○ | ○ | ○ | ○ | ○ | ○ | ○ |
| Unit of blended amount: Part by mass | | | | | | | | | | | | |

[TABLE 6]

| | Comparative Example III | | |
|---|---|---|---|
| | 1 | 2 | 3 |
| PVC (Part by mass) | 100 | 100 | 100 |
| Mg-Zn-based thermal stabilizer (Part by mass) | 1 | 0 | 1 |
| Ca-Zn-based thermal stabilizer (Part by mass) | 0 | 0 | 0 |
| Pb-based thermal stabilizer (Part by mass) | 0 | 2 | 0 |
| Heat expandable graphite (Part by mass) | 0 | 0 | 0 |
| Synthetic hydrotalcite (Part by mass) | 0 | 0 | 15 |
| Borosilicate glass (Part by mass) | 0 | 0 | 0 |
| Surface temperature of tube after 60 minutes (˚C) | 127 | Not measured | Not measured |
| Smoke generation time (min) | 77 | 60 | 45 |
| 2 hours fire resistance test | x | x | x |
| Comprehensive evaluation | x | x | x |

As is clear from TABLE 5, it has been found that the tube materials of EXAMPLES, 1 to 12 have excellent heat shielding property, and were excellent in all of the physical properties such as moldability and mechanical strength and the fire resistance, and that the spread of flame and smoke to the non-heated area separated by the floor material at the time of combustion can be suppressed for a long time.
In contrast, as is clear from TABLE 6, it has been found that the tube materials of COMPARATIVE EXAMPLES, 1 to 3 has a short smoke generation time and are inferior in fire resistance.
The piping material according to the present invention has fire-resistance performance of exceeding 2 hours, thereby being able to exhibit excellent performances which have not been found conventionally.
It should be noted that, in the EXAMPLES, although the nominal diameters of the tube materials were set as 100 A and 125 A, the similar effects can be obtained with respect to other nominal diameters. In addition, the tube materials of EXAMPLES 1 to 12 can be colored since they do not contain any heat expandable graphite, and are excellent in recycling property.

<<EXAMPLE IV>>

Various measured values and evaluation methods used in EXAMPLES were obtained by the measurement and evaluation, respectively, through the use of the following methods.

Evaluation method:

(1) Evaluation of fire-resistance performance

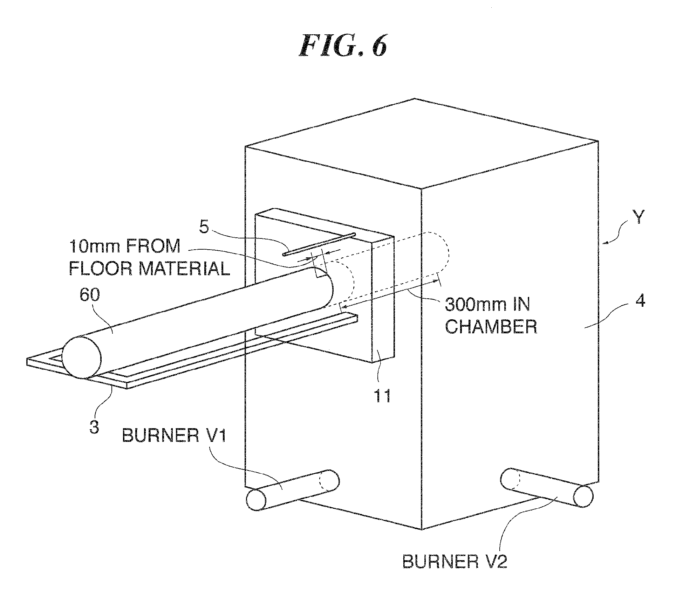

Evaluation method of fire resistance test: According to ISO834-1, by using a fire resistance test furnace Y (see Fig.6), Fire Resistance Test IV was performed as shown below.
Samples to be evaluated were pipe-like tube materials newly fabricated, one tube material being of length 1,300 mm, outer diameter 114 mm, thickness 7.1 mm, nominal diameter 100 A.
In Fig.6, an autoclaved lightweight concrete board (length 600 mm x width 600 mm x thickness 75 mm) was used as a wall material 11. As the fireproof structure method, the gap between the tube material (pipe) 60 and the compartment pass-through section was sealed with mortar.
The tube material 60 was arranged so that one end of the tube material 60 was exposed to the heated area (heated chamber) 4 by 300 mm from the surface of the heated side of the wall material 11, and the other end was exposed to the non-heated area by 800 mm or more from the surface of the non-heated side of the wall material. Two points on the inner side wall of the heated chamber 4 of the fire resistance test furnace Y were provided with burners (V1, V2). In addition, in the inside of the furnace, two thermal contacts of a thermocouple 5 were installed at positions apart from the wall by 100 mm in order to arrange evenly with respect to the test surface of the wall material 11, and another thermocouple is also installed for measuring a temperature of the surface of the tube material 60 positioned at a distance of 10 mm from the wall material 11. Furthermore, the fire resistance test furnace Y was equipped with an apparatus (not shown) for measuring pressure in the furnace.

The fire resistance test furnace was operated by using the two burners so that a time lapsed of the heated temperature satisfies the numerical value represented by the following equation.

$$345 \times \log(8 \times T + 1) + 20 \qquad T: \text{Time (min.)}$$

After the start of heating, a time to be required for generation of smoke from a gap between the compartment pass-through section and the tube material 60 (smoke generation time) was measured. A case in which no smoke is generated for 60 minutes or longer corresponds to an acceptable level. The generation of smoke (smoke generation) was determined with the naked eye.

In addition, it was determined that whether a residue was formed or not. The symbol "o" represents the case in which a residue was formed to achieve a state close to a closure, and the symbol "X" represents the case in which such a formation was not achieved.

In addition, a deflection amount of the tube material which was set at 40 mm from the wall material in a non-heated area was measured (see Fig.2). Namely a period of time when a deflection amount at the given position reaches 5 mm was measured. A case in which the period of time to be required was 60 minutes or longer corresponds to an acceptable level.

(2) Comprehensive evaluation

In respect to the evaluation results mentioned above, comprehensive evaluations were shown in TABLE. Namely, the symbol "o" represents a case in which a smoke generation time is 60 minutes or longer, a given amount of the residue was formed, and a period of time during which a deflection amount at a given position reaches 5 mm requires 60 minutes or longer. The symbol "X" represents a case in which even at least one of the above conditions is not satisfied.

[EXAMPLE IV-1]

A resin composition for middle layer was prepared by blending 0.2 part by mass of magnesium stearate, 0.8 part by mass of zinc stearate, 6 parts by mass of borosilicate glass having an average particle diameter of 20 μm and 5 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). A resin composition prepared by blending 2.0 parts by mass of lead stearate ("NC18ED" manufactured by MIZUSAWA INDUSTRIAL CHEMICALS, LTD.) and 1.0 part by mass of a molybdenum-based smoke suppressant relative to 100 parts by mass of a polyvinyl chloride resin being polyvinyl chloride homopolymer (average degree of polymerization: 1030) was used each for forming an outer layer and an inner layer. By feeding the obtained resin composition for middle layer and the obtained resin composition for outer and inner layer into an extrusion molding machine, a pipe-like tube material (length 1,300 mm, outer diameter 114 mm, thickness 7.1 mm, nominal diameter 100 A, thickness of middle layer 75 %) having a three-layered structure (outer layer / middle layer / inner layer) was formed by extrusion molding. The obtained tube material was subjected to the evaluation of fire-resistance performance. The results obtained are shown in TABLE 7.

[EXAMPLE IV-2]

A resin composition was prepared by blending 0.1 part by mass of magnesium stearate, 0.4 part by mass of zinc stearate, 6 parts by mass of borosilicate glass having an average particle diameter of 20 μm and 3.6 parts by mass of a synthetic hydrotalcite (magnesium-aluminum-hydroxide-carbonate-hydrate) having an average particle diameter of 0.4 μm relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 114 mm, thickness 7.1 mm, nominal diameter 100 A) was formed by extrusion molding. The obtained tube material having a single-layered structure was subjected to the evaluation of fire-resistance performance. The results obtained are shown in TABLE 7.

[EXAMPLE IV-3]

A resin composition was prepared by blending 0.15 part by mass of magnesium stearate, 0.6 part by mass of zinc stearate, 6 parts by mass of borosilicate glass having an average particle diameter of 20 $\mu$m and 3.6 parts by mass of a synthetic hydrotalcite (magnesium·aluminum·hydroxide·carbonate·hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 114 mm, thickness 7.1 mm, nominal diameter 100 A) was formed by extrusion molding. The obtained tube material having a single-layered structure was subjected to the evaluation of fire-resistance performance. The results obtained are shown in TABLE 7.

[EXAMPLE IV-4]

A resin composition for middle layer was prepared by blending 0.2 part by mass of magnesium stearate, 0.8 part by mass of zinc stearate, 6 parts by mass of borosilicate glass having an average particle diameter of 20 $\mu$m and 3.6 parts by mass of a synthetic hydrotalcite (magnesium-aluminum--hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-5]

A resin composition for middle layer was prepared by blending 0.3 part by mass of magnesium stearate, 1.2 parts by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-6]

A resin composition for middle layer was prepared by blending 0.4 part by mass of magnesium stearate, 1.6 parts by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-7]

As shown in TABLE 1, a resin composition for middle layer was prepared by blending 0.1 part by mass of magnesium stearate, 0.8 part by mass (0.4 part by mars + 0.4 part by mass) of zinc stearate, 0.1 part by mass of calcium stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material(length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-8]

A resin composition for middle layer was prepared by blending 0.2 part by mass of calcium stearate, 0.8 part by mass of zinc stearate, 6 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-9]

A resin composition for middle layer was prepared by blending 0.2 part by mass of magnesium stearate, 0.8 part by mass of zinc stearate, 4 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to the evaluation of fire-resistance performance. The results obtained are shown in TABLE 7.

[EXAMPLE IV-10]

A resin composition for middle layer was prepared by blending 0.2 part by mass of magnesium stearate, 0.8 part by mass of zinc stearate, 8 parts by mass of borosilicate glass having an average particle diameter of 20 $\mu$m and 3.6 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). A resin composition used for each of an outer layer and an inner layer was prepared by blending 2.0 parts by mass of lead stearate ("NC18ED" manufactured by MIZUSAWA INDUSTRIAL CHEMICALS, LTD.) relative to 100 parts by mass of a polyvinyl chloride resin being polyvinyl chloride homopolymer (average degree of polymerization: 1030). By feeding the obtained resin composition for middle layer and the obtained resin composition for outer and inner layer into an extrusion molding machine, a pipe-like tube material having a three-layered structure (outer layer / middle layer / inner layer) was formed by extrusion molding. The obtained tube material (length 1,300 mm, outer diameter 114 mm, thickness 7.1 mm, nominal diameter 100 A, thickness of middle layer 75 %) was subjected to evaluation of fire-resistance performance. The results obtained are shown in TABLE 7.

[COMPARATIVE EXAMPLE IV-I]

A resin composition was prepared by blending 0.2 part by mass of magnesium stearate, 0.8 part by mass of zinc stearate relative to 100 parts by mass of a polyvinyl chloride resin being polyvinyl chloride homopolymer (average degree of polymerization: 1030). By feeding the obtained resin composition into an extrusion molding machine, a pipe-like tube material (length 1,300 mm, outer diameter 114 mm, thickness 7.1 mm, nominal diameter 100 A) having a single-layered structure was formed by extrusion molding. The obtained tube material was subjected to the evaluation of fire-resistance performance. The results obtained are shown in TABLE 8.

[COMPARATIVE EXAMPLE IV-2]

A polyvinyl chloride tube having a single-layered structure which contains lead and is commercially available as a usual pipe (2 parts by mass of Pb-based thermal stabilizer was blended relative to 100 parts by mas s of PVC, length 1,300 mm, outer diameter 114 mm, thickness 7.1 mm, nominal diameter 100 A) was subjected to the evaluation of fire-resistance performance. The results obtained are shown in TABLE 8.

[COMPARATIVE EXAMPLE IV-3]

A resin composition was prepared by blending 0.2 part by mass of magnesium stearate, 0.8 part by mass of zinc stearate and 10 parts by mass of a synthetic hydrotalcite (magnesium·aluminum·hydroxide·carbonate·hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material having a single-layered structure was formed by extrusion molding. The obtained tube material (length 1,300 mm, outer diameter 114 mm, thickness 7.1 mm, nominal diameter 100 A) was subjected to the evaluation of fire-resistance performance. The results obtained are shown in TABLE 8.

[COMPARATIVE EXAMPLE IV-4]

A resin composition was prepared by blending 0.2 part by mass of magnesium stearate, 0.8 part by mass of zinc stearate and 15 parts by mass of a synthetic hydrotalcite (magnesium-aluminum-hydroxide-carbonate-hydrate) having an average particle diameter of 0.4 $\mu$m relative to 100 parts by mass of a polyvinyl chloride resin being polyvinyl chloride homopolymer (average degree of polymerization: 1030). By feeding the obtained resin composition into an extrusion molding machine, a pipe-like tube material having a single-layered structure was formed by extrusion molding. The obtained tube material (length 1,300 mm, outer diameter 114 mm, thickness 7.1 mm, nominal diameter 100 A) was subjected to the evaluation of fire-resistance performance. The results obtained are shown in TABLE 8.

[TABLE 7]

[Table 7]

| | Example IV | | | | | | | | | |
|---|---|---|---|---|---|---|---|---|---|---|
| | 1 | 2 | 3 | 4 | 5 | 6 | 7 | 8 | 9 | 10 |
| PVC | 100 | 100 | 100 | 100 | 100 | 100 | 100 | 100 | 100 | 100 |
| Mg-Zn-based Thermal stabilizer | 1 | 0.5 | 0.75 | 1 | 1.5 | 2 | 0.5 | 0 | 1 | 1 |
| Ca-Zn-based thermal stabilizer | 0 | 0 | 0 | 0 | 0 | 0 | 0.5 | 1 | 0 | 0 |
| Pb-based thermal stabilizer | 0 | 0 | 0 | 0 | 0 | 0 | 0 | 0 | 0 | 0 |
| Synthetic hydrotalcite | 5 | 3.6 | 3.6 | 3.6 | 3.6 | 3.6 | 3.6 | 3.6 | 3.6 | 3.6 |
| Borosilicate glass | 6 | 6 | 6 | 6 | 6 | 6 | 6 | 6 | 4 | 8 |
| Time to reach 5 mm of deflection amount (min) | ≧70 | ≧60 | ≧60 | ≧60 | ≧60 | ≧60 | ≧60 | ≧60 | ≧60 | ≧60 |
| Smoke generation time (min) | ≧70 | ≧60 | ≧60 | ≧60 | ≧60 | ≧60 | ≧60 | ≧60 | ≧60 | ≧60 |
| Residue formation | ○ | ○ | ○ | ○ | ○ | ○ | ○ | ○ | ○ | ○ |

(continued)

| | Example IV | | | | | | | | | |
|---|---|---|---|---|---|---|---|---|---|---|
| | 1 | 2 | 3 | 4 | 5 | 6 | 7 | 8 | 9 | 10 |
| Comprehensive evaluation | ○ | ○ | ○ | ○ | ○ | ○ | ○ | ○ | ○ | ○ |
| Unit of blended amount: Part by mass | | | | | | | | | | |

[TABLE 8]

| | Comparative Example IV | | | |
|---|---|---|---|---|
| | 1 | 2 | 3 | 4 |
| PVC (Part by mass) | 100 | 100 | 100 | 100 |
| Mg-Zn-based thermal stabilizer (Part by mass) | 1 | 0 | 1 | 1 |
| Ca-Zn-based thermal stabilizer (Part by mass) | 0 | 0 | 0 | 0 |
| Pb-based thermal stabilizer (Part by mass) | 0 | 2 | 0 | 0 |
| Synthetic hydrotalcite (Part by mass) | 0 | 0 | 10 | 15 |
| Borosilicate glass (Part by mass) | 0 | 0 | 0 | 0 |
| Time to reach 5 mm of deflection amount (min) | 43 | 32 | 44 | 48 |
| Smoke generation time (min) | 56 | 42 | 57 | 58 |
| Residue formation | × | × | ○ | ○ |
| Comprehensive evaluation | × | × | × | × |

As is clear from TABLE 7, it has been found that the tube materials of EXAMPLES 1 to 10 can form a predetermined residue, and has the smoke generation time of 60 minutes or longer in the abovementioned fire resistance test, and is excellent in fire resistance. As a result, it is possible that the spread of flame and smoke to the non-heated area separated by the wall material at the time of combustion can be prevented for a long time. In addition, it has been found that a deflection amount is small in the non-heated area. Accordingly, a gap is not formed at the through-hole, and thus it is possible to protect the belching of flame and smoke. Furthermore, the tube materials of EXAMPLES 1 to 10 were also excellent in physical properties such as moldability and mechanical properties.

Whereas, as is clear from TABLE 8, it has been found that the tube materials of COMPARATIVE EXAMPLES, 1 to 4 have a large amount of the deflection amount in the non-heated area and a short smoke generation time, and are inferior in fire resistance.

The piping material according to the present invention has fire-resistance performance of exceeding 1 hour and can exhibit an excellent performances which have not been found conventionally.

It should be noted that in the EXAMPLES, though the nominal diameters were set as 100 A, the similar effects can be obtained in other nominal diameters. In addition, since the tube materials of EXAMPLES 1 to 10 do not contain any heat expandable graphite, they can be colored, and they are excellent in recycling property,.

Namely, as is clear from EXAMPLES I to IV, since the tube material according to the present invention was able to be provided with the fire resistance over the entire piping, unlike in the case of the conventional piping in which a fire-resistant treatment is applied to the compartment pass-through sections through the use of a fire-resistant expandable sheet-like covering material, it was possible to exhibit very excellent fire resistance. Although, in the above fire resistance test in the EXAMPLES, the fire-resistant ability was evaluated by the substitute evaluation method such that the heating was carried out in the condition that an end of the piping material was projected into the fire resistance furnace, it is assumed that, when a burning happens in practical conditions where providing the piping materials to pass through between slabs of each flat in building structure or between partition walls of each floor in building structure, more remarkable difference in fire-resistant ability can be observed. Namely, it is assumed that the piping material according to the present invention can be resistant to a long-term combustion at the time of combustion as a whole, the flame and smoke are difficult to spread out of the burned chamber, and thus the spread of the burning can be effectively prevented.

INDUSTRIAL APPLICABILITY

The fire-resistant piping material according to the present invention can preferably apply to a piping material of building structure, and also can be use in various field widely as a piping material which is used in a portion where a remarkable fire resistance is required.

EXPLANATION OF SYMBOLS

X, Y    Fire Resistance Test furnace
1       Floor material
2       Pipe for vertical use
3       Pipe joint
4       Heated chamber
5       Thermocouple in furnace
6       Pipe for transverse tube
7       Mortar
11      Wall material
20, 60  Tube material (pipe)
31      Main tube of pipe joint
31a     Upper socket
31b     Lower socket
32a     Connecting part of transverse tube
32a     Socket
41      Through-hole

**Claims**

1. A fire-resistant piping material comprising a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein the fire-resistant piping material is formed by using a fire-retardant resin composition containing said synthetic hydrotalcite compound in an amount within a range of 2 parts by mass to 12 parts by mass relative to 100 parts by mass of the polyvinyl chloride-based resin.

2. The fire-resistant piping material according to Claim 1, wherein said fire-retardant resin composition further contains a borosilicate glass in an amount within a range of 2 parts by mass to 10 parts by mass relative to 100 parts by mass of the polyvinyl chloride-based resin.

3. The fire-resistant piping material according to Claim 1 or 2, wherein said fire-retardant resin composition contains at least one selected from the group consisting of the Ca-Zn-based thermal stabilizer, the Mg-Zn-based thermal stabilizer and the Ca-Mg-Zn-based thermal stabilizer in an amount within a range of 0.4 parts by mass to 2.5 parts by mass relative to 100 parts by mass of the polyvinyl chloride-based resin.

4. The fire-resistant piping material according to any one of Claims 1 to 3, being formed by using a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire-resistance test which is conducted by passing the piping material through a floor material according to ISO834-1, there exists a state where an exposed length of the piping material at the heated side is shortened at least one time while maintaining the exposed length being not zero, and a residue is formed so as to put the through-hole into a state close to a closure while maintaining the exposed length of the piping material at the heated side being not zero when the fire resistance test is terminated.

5. The fire-resistant piping material according to any one of Claims 1 to 3, being formed by using a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire resistance test which is conducted by passing the piping material through a floor material according to ISO834-1, a temperature of the surface of the piping material at a position of 10 mm from the floor material in a non-heated area does not exceed 100˚C at the time when 60 minutes has elapsed from the start of the fire resistance test.

6. The fire-resistant piping material according to Claim 2 or 3, being formed by using a fire-retardant resin composition which contains a polyvinyl chloride-based resin, at least one selected from the group consisting of a Ca-Zn-based thermal stabilizer, a Mg-Zn-based thermal stabilizer and a Ca-Mg-Zn-based thermal stabilizer, and a synthetic hydrotalcite compound, wherein, as a result of a fire resistance test which is conducted by passing the piping material through a wall material in accordance with ISO834-1, a residue is formed, and a period of time required until a downward deflection amount at a position of 40 mm from the wall material of the piping material in a non-heated area reaches 5 mm or more is 60 minutes or longer from the start of the fire resistance test.

7. The fire-resistant piping material according to any one of Claims 1 to 6, including at least three layers having an outer layer, a middle layer and an inner layer, wherein said middle layer is formed by using the fire-retardant resin composition.

8. The fire-resistant piping material according to Claim 7, wherein said outer layer and said inner layer contain a molybdenum-based smoke suppressant.

9. A piping structure, wherein the fire-resistant piping materials according to Claims 1 to 8 is used, and piping is performed by passing through a building structure.

FIG. 1A            FIG. 1B            FIG. 1C            FIG. 1D

EP 2 447 584 A1

## FIG. 2

800mm

300mm

60

60

3

DEFLECTION AMOUNT   40mm

HEATED AREA 4

11

FIG. 3A

FIG. 3B

FIG. 3C

FIG. 3D

## FIG. 4

# FIG. 5

HEIGHT OF 10mm FROM FLOOR MATERIAL

20

5

1

X

300mm IN CHAMBER

100mm FROM FLOOR MATERIAL

4

BURNER V1

BURNER V2

*FIG. 6*

10mm FROM
FLOOR MATERIAL

5

60

3

BURNER V1

11

300mm IN
CHAMBER

Y

4

BURNER V2

## INTERNATIONAL SEARCH REPORT

| | International application No. |
|---|---|
| | PCT/JP2011/060211 |

### A. CLASSIFICATION OF SUBJECT MATTER

*F16L5/04*(2006.01)i, *B32B1/08*(2006.01)i, *B32B27/30*(2006.01)i, *C08K3/26* (2006.01)i, *C08K3/40*(2006.01)i, *F16L9/12*(2006.01)i, *F16L11/04*(2006.01)i, *F16L11/12*(2006.01)i

According to International Patent Classification (IPC) or to both national classification and IPC

### B. FIELDS SEARCHED

Minimum documentation searched (classification system followed by classification symbols)
F16L5/04, B32B1/08, B32B27/30, C08K3/26, C08K3/40, F16L9/12, F16L11/04, F16L11/12

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-269584 A (Sekisui Chemical Co., Ltd.),<br>02 December 2010 (02.12.2010),<br>paragraphs [0001], [0002], [0026] to [0034]<br>(Family: none) | 1-6,9<br>7-9 |
| Y | JP 2008-180367 A (Sekisui Chemical Co., Ltd.),<br>07 August 2008 (07.08.2008),<br>paragraphs [0001], [0057]; fig. 2<br>(Family: none) | 7-9 |
| Y | JP 2005-97504 A (Mitsubishi Plastics, Inc.),<br>14 April 2005 (14.04.2005),<br>paragraphs [0001], [0008]<br>& US 2006/0014874 A1 & WO 2004/041930 A1<br>& KR 10-2005-0057685 A | 8,9 |

☐ Further documents are listed in the continuation of Box C.     ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 27 May, 2011 (27.05.11) | 07 June, 2011 (07.06.11) |

| Name and mailing address of the ISA/<br>Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09176498 A
- JP H1095887 A

- JP 2008180068 A